# EUROPEAN PATENT APPLICATION

(11) **EP 1 734 238 A1**
(43) Date of publication of application: **20.12.2006**
(21) Application number: 05720627.8
(22) Date of filing: 11.03.2005
(51) Int. Cl.: F02D 29/02, G01P 15/00, G01P 3/488, G08C 17/02

(54) **TRACTION CONTROL SYSTEM AND SENSOR UNIT FOR THE SAME**

(30) Priority: 15.03.2004 JP 2004072586
(71) Applicant: THE YOKOHAMA RUBBER CO., LTD., Tokyo 105-8685 (JP)
(72) Inventor: HATTORI, Yutaka, c/o The Yokohama Rubber Co., Ltd., Hiratsuka-shi, Kanagawa 2540047 (JP); HATANO, Yasuo, c/o The Yokohama Rubber Co., Ltd., Hiratsuka-shi, Kanagawa 2540047 (JP)
(74) Representative: HOFFMANN EITLE
(86) International application number: PCT/JP2005/004356
(87) International publication number: WO 2005/088106

(57) **Abstract**

The invention provides a traction control system and sensor unit thereof which easily and highly accurately senses accelerations generated vertically, longitudinally and laterally in a wheel to control the drive of the vehicle. A sensor unit 100 provided with an acceleration sensor sensing accelerations generated in association with rotation in the X, Y and Z directions including the rotation direction is disposed in a body of rotation of a rotation mechanism section including each tire 300, and the sensing result, a digital value, is transmitted as digital data by use of radio wave. The digital data is received by a monitor apparatus 200 disposed in each tire house and is subjected to arithmetic processing. The acceleration value thus obtained is outputted to a drive control unit 700. Based on the acceleration value obtained and distortion characteristic data preliminarily stored, the drive control unit 700 estimates the amount of distortion of each tire, and based on the estimated amount of tire distortion and the sensing result of the number of rotations of each tire 300, controls a sub-throttle actuator 412 to drive a sub-throttle 416.

## Description

### TECHNICAL FIELD

The present invention relates to a traction control system and sensor unit thereof which senses acceleration exerted on a wheel during running of a vehicle and thereby perform a proper control.

### BACKGROUND ART

According to conventional art, when the friction force between the road surface and a tire is reduced in such cases as when the road surface is wet in the rain, the vehicle can slip and move in an unexpected direction at the time when the accelerator is pushed down, causing an accident.

To prevent an accident caused by such slip, sudden acceleration, and so on, there have been developed Traction Control System (hereinafter referred to as TCS), ABS, and further a drive control system provided with a YAW sensor, and other systems.

For example, TCS is a system which senses the rotation state of each tire and controls the drive force based on the sensing result so as to prevent each tire from slipping.

As the rotation state of a tire, it is possible to sense the number of rotations and the states such as air pressure and distortion, and use the sensing result to control the drive force.

As examples of such control system, there have been known a brake apparatus for an automobile (hereinafter referred to as patent document 1) disclosed in Japanese Patent Publication H5-338528), a brake control apparatus (hereinafter referred to as patent document 2) disclosed in Japanese Patent Publication 2001-018775, a method and apparatus for controlling a vehicle (hereinafter referred to as patent document 3) disclosed in Japanese Patent Publication 2001-182578, a vehicle movement control apparatus (hereinafter referred to as patent document 4) disclosed in Japanese Patent Publication 2002-137721, a brake apparatus (hereinafter referred to as patent document 5) disclosed in Japanese Patent Publication 2002-160616, and so on.

In patent document 1, there is disclosed a brake apparatus in which negative pressure is supplied from a vacuum tank to a vacuumbooster linked with a brake pedal, negative pressure is supplied from a vacuum pump to the vacuum tank, and the vacuum pump is driven by a pump motor, whereby the pump motor is controlled so as to operate the vacuum pump when a state wherein deceleration of an automobile reaches a predetermined value is detected by an acceleration sensor 14, thereby preventing the change of an brake operation feeling at the time of an abrupt brake operation as well as a brake operation immediately after that.

In patent document 2, there is disclosed a brake control apparatus including control means which effects ABS control, the control means being provided with: lateral acceleration estimation means for estimating lateral acceleration produced in a vehicle; and comparison and determination means for comparing a lateral acceleration estimated by the lateral acceleration estimation means, an estimated lateral acceleration by vehicle behavior sensing means anda lateral acceleration sensed by a lateral acceleration sensor included in the vehicle behavior detecting means and for determining that normal turning is under way in the case of the difference between the estimated and sensed accelerations is less than a predetermined value and determining that abnormal turning is under way in the case of the difference is equal to or larger than the predetermined value, whereby the control means is adapted to change the type of control based on whether normal turning or abnormal turning is determined to be under way during the ABS control.

In patent document 3, there is disclosed a method and apparatus for controlling a vehicle in which a control signal for adjusting the deceleration and/or the acceleration of a vehicle is formed by a correspondingsetvalue, wherein a correction factor expres sing a vehicle acceleration or a vehicle deceleration generated by an inclination of the traveling road surface is formed, and the correction factor is made to overlap the set value, whereby the setting of deceleration and/or acceleration of the vehicle is improved.

In patent document 4, there is disclosed a vehicle movement control apparatus in which a skid angle change speed β' of the center-of-gravity point as the actual yawing momentum of a vehicle having plural wheels is acquired, and the brake fluid pressure Δ_{P} is applied to one of brakes of left and right rear wheels when the absolute value of the change speed β' is equal to or larger than a preset value β₀', thereby generating the yawing moment in a manner in which the more the absolute value of the change speed β' is, the more the value of the yawing moment is and at the same time, in a direction to reduce the absolute value of the change speed β'; even during the control of the yawing moment, discrimination of whether the slip control is needed or not on the wheel to which the brake fluid pressure Δ_{P} is applied, continues and, when the slip control is needed, the slip control for keeping a slip ratio within a proper range is executed by controlling the brake fluid pressure Δ_{P}.

In patent document 5, there is disclosed a brake apparatus including at least two sensors from among an acceleration sensor for sensing an acceleration in the longitudinal direction of a vehicle, a wheel speed sensor for sensing the wheel speed of each wheel, and a braking pressure sensor for sensing a braking pressure, wherein a target braking pressure is calculated by use of feedback fromat least two sensors, and an indicator current is calculated by an indicator current calculation section based on this calculation result, and the indicator current is carried into a brake drive actuator to produce braking force corresponding to the magnitude of the indicator current, whereby even when disturbance occurs or one sensor is in trouble, the abnormal output can be suppressed.

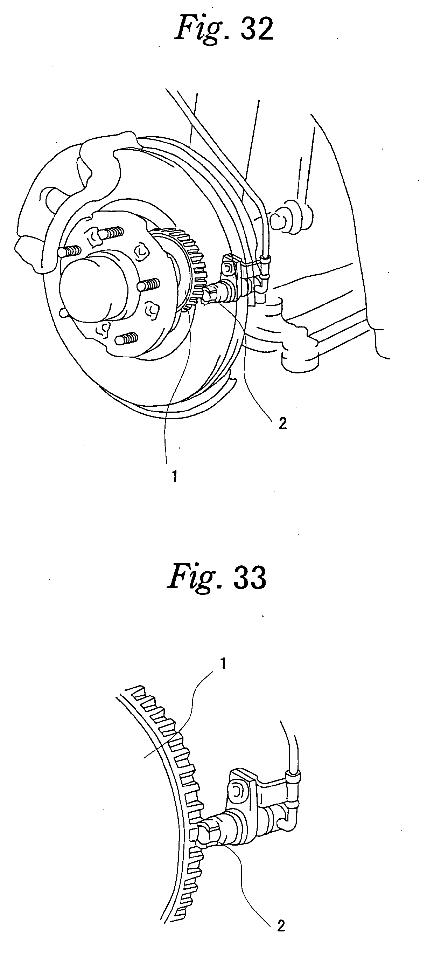

As a method for sensing the number of rotations of a tire, as shown in Figures 32 and 33, there is typically used a method which senses the number of rotations of a tire by use of a rotor 1 rotating integrally with a wheel carrier, and a pickup sensor 2. In this method, multiple concaves and convexes spaced equally around the circumferential surface of the rotor 1 traverse the magnetic field generated by the pickup sensor 2, whereby the magnetic flux density is varied, generating a pulsed voltage in a coil of the pickup sensor 2; the number of rotations can be detected by sensing this pulse. An exemplary basic principle of this method is disclosed in Japanese Patent Publication S52-109981.
Patent document 1: Japanese Patent Publication H5-338528
Patent document 2: Japanese Patent Publication 2001-018775
Patent document 3: Japanese Patent Publication 2001-182578
Patent document 4: Japanese Patent Publication 2002-137721
Patent document 5: Japanese Patent Publication 2002-160616
Patent document 6: Japanese Patent Publication S52-109981

### DISCLOSURE OF THE INVENTION

### PROBLEMS TO BE SOLVED BY THE INVENTION

In the technique disclosed in patent document 1, however, while the brake control operation feeling is improved, when the friction force between the tire and road surface is varied, it is difficult to set a threshold value for which there are assumed such cases as when the brake torque or drive torque exceeds the friction force between the tire and road surface, thereby causing a slip.

In the techniques disclosed in patent documents 2 to 5, compared to the above described technique disclosed in patent document 1, more advanced control is performed in which an acceleration of the vehicle itself during running of the vehicle is sensed and the brake control and other drive controls of the vehicle are performed based on this acceleration. However, the friction force between the tire and road surface is varied even in the identical vehicle depending on the kind of tire installed in the vehicle and the road condition. Further, there are vehicles, such as a 4WD vehicle, in which drive control is performed separately for each tire. Consequently, even with the control method which takes into consideration the acceleration of the vehicle itself during its running, a highly accurate control may be impossible.

To address the above problem, an object of the present invention is to provide a traction control system and sensor unit thereof which easily and highly accurately senses accelerations generated vertically, longitudinally and laterally in a wheel to control the drive of the vehicle.

### MEANS FOR SOLVING THE PROBLEMS

To achieve the above object, the present invention proposes a traction control system for a vehicle which is constituted so as to drive an engine throttle drive actuator according to a result of sensing an accelerator operation state of the vehicle and thereby cause a target drive force to be generated, the traction control system comprising: a sensor unit disposed in a rotation mechanism section including a body of rotation positioned in the vehicle body side, for securing a wheel and allowing the wheel to rotate, and the wheel, the sensor unit sensing a first acceleration generated in association with rotation in a direction orthogonal to the rotation axis, and a second acceleration generated in a direction of rotation, and converting a sensing results of the first and second accelerations to a digital value, and transmitting digital data including the digital value; a monitor apparatus which receives the digital data transmitted from the sensor unit to acquire the sensing results of the first and second accelerations; and drive means which drives the engine throttle drive actuator based on the sensing results of the first and second accelerations acquired by the monitor apparatus.

With the traction control system having the above described configuration, the sensor unit is disposed in a predetermined position of the rotation mechanism section; the first acceleration generated in association with rotation in a direction orthogonal to the rotation axis, and the second acceleration generated in a direction of rotation are sensed by the sensor unit; the sensing result is converted to a digital value, and the digital data including the digital value is transmitted.

Also, the digital data transmitted from the sensor unit is received by the monitor apparatus, whereby the sensing results of the first and second accelerations are acquired; based on the sensing results of the first and second accelerations acquired by the monitor apparatus, the engine throttle drive actuator is driven by the drive means.

Here, as the number of rotations in the rotation mechanism section increases, centrifugal force becomes larger. Thus, as the number of rotations increases, the first acceleration becomes larger. Also, in association with the number of rotations, the position of the sensor unit moves, and the direction of gravity acceleration applied to the sensor unit varies. Consequently, the magnitude of the second acceleration in the sensor unit varies in a sinusoidal waveform in association with rotation, and at the same time the periodof the variation becomes shorter as the number of rotations increases. Accordingly, the speed of the vehicle can be determined from the sensing result of the first acceleration, and the number of rotations per unit time of the wheel can be determined from the sensing result of the second acceleration.

Also, the present invention proposes the traction control system having the above described configuration, wherein: the sensor unit includes means which senses a third acceleration generated in a direction of the rotation axis, converts the sensing result to a digital value, and transmits the digital value, included in the digital data, to the monitor apparatus; the monitor apparatus includes means which acquires the sensing result of the third acceleration; and the drive means has means which drives the engine throttle drive actuatorbased on the sensing results of the first, second and third accelerations.

With the traction control system having the above described configuration, by use of the sensor unit, the third acceleration generated in a direction of rotation axis is sensed, the sensing result is converted to a digital value, and the digital value, included in the digital data, is transmitted.

Further, the sensing result of the third acceleration is acquired by the monitor apparatus; based on the sensing results of the first, second and third accelerations, the engine throttle drive actuator is driven by the drive means.

Here, the third acceleration varies according to the roll and lateral movement of the rotation mechanism section, for example, according to the roll of the body of rotation or wheel, and the lateral movement of the body of rotation or wheel caused by a steering wheel operation. Accordingly, the roll and lateral movement of the rotation mechanism section can be sensed from the sensing result of the third acceleration.

Also, the present invention proposes the traction control system having the above described configuration, wherein: the sensor unit includes means which senses a change of the second acceleration, means which senses the number of rotations per unit time based on the change of the second acceleration, and means which converts the sensed number of rotations to a digital value and transmits the digital value, included in the digital data, to the monitor apparatus; the monitor apparatus includes means which receives the digital value of the number of rotations from the sensor unit; and the drive means includes means which drives the engine throttle drive actuator based on the sensing results of the first, second and third accelerations and the sensing result of the number of rotations.

With the traction control system having the above described configuration, by use of the sensor unit, the change of the second acceleration is sensed, and at the same time the number of rotations per unit time is sensed based on the change of the second acceleration, and the sensed number of rotations is converted to a digital value, and the digital value, included in the digital data, is transmitted to the monitor apparatus. Accordingly, the process of sensing the number of rotations based on the second acceleration needs not to be performed in the monitor apparatus.

Also, the present invention proposes the above described traction control system, wherein: the sensor unit includes means which senses a change of the first acceleration, means which senses the running speed based on the change of the first acceleration, and means which converts the sensed running speed to a digital value and transmits the digital value, included in the digital data, to the monitor apparatus; the monitor apparatus includes means which receives the digital value of the running speed from the sensor unit; and the drive means includes means which drives the engine throttle drive actuator based on the sensing results of the first, second and third accelerations and the sensing result of the running speed.

With the traction control system having the above described configuration, by use of the sensor unit, the change of the first acceleration is sensed, and at the same time the running speed is sensed based on the change of the first acceleration, the sensed running speed is converted to a digital value, and the digital value, included in the digital data, is transmitted to the monitor apparatus. Accordingly, the process of sensing the running speed based on the second acceleration needs not to be performed in the monitor apparatus.

Also, the present invention proposes the above described traction control system for a vehicle which is constituted so as to drive each drive actuator of an engine throttle and a drive torque distribution mechanism according to a result of sensing an accelerator operation state of the vehicle and thereby cause a target drive force to be generated, the traction control system comprising: a plurality of sensor units disposed in each of a plurality of rotation mechanism sections including a body of rotation positioned in the vehicle body side, for securing a wheel and allowing the wheel to rotate, and the wheel, respectively, the plurality of sensor units sensing a first acceleration generated in association with rotation in a direction orthogonal to the rotation axis, and a second acceleration generated in a direction of rotation, and converting a sensing results of the first and second accelerations to a digital value, and transmitting digital data including the digital value; a monitor apparatus which receives the digital data transmitted from the plurality of sensor units to acquire the sensing results of the first and second accelerations; and control means which controls the drive of a predetermined one from among each said drive actuator based on the sensing results of the first and second accelerations acquired by the monitor apparatus.

With the traction control system having the above described configuration, the plurality of sensor units are disposed in each predetermined position of the plurality of rotation mechanism sections; by use of the plurality of sensor units, the first acceleration generated in association with rotation in a direction orthogonal to the rotation axis, and the second acceleration generated in a direction of rotation are sensed, the sensing result is converted to a digital value, and the digital value, included in the digital data, is transmitted.

Further, by use of the monitor apparatus, the digital data transmitted from the sensor unit is received to acquire the sensing results of the first and second accelerations; by use of the control means, the drive of a predetermined drive actuator from among each said drive actuator is controlled based on the sensing results of the first and second accelerations acquired by the monitor apparatus. By driving the engine throttle drive actuator, the output of drive torque of the vehicle is controlled; by driving the actuator for driving the drive torque distribution mechanism, the drive torque of the vehicle is distributed to each wheel.

Here, as the number of rotations in the rotation mechanism section increases, centrifugal force becomes larger. Thus, as the number of rotations increases, the first acceleration becomes larger. Also, in association with the number of rotations, the position of the sensor unit moves, and the direction of gravity acceleration applied to the sensor unit varies. Consequently, the magnitude of the second acceleration in the sensor unit varies in a sinusoidal waveform in association with rotation, and at the same time the period of the vari ation becomes shorter as the number of rotations increases. Accordingly, the speed of the vehicle can be determined from the sensing result of the first acceleration, and the number of rotations per unit time of the wheel can be determined from the sensing result of the second acceleration.

Also, the present invention proposes the traction control system having the above described configuration, wherein the drive torque distribution mechanism includes means which distributes to at least one from among the plurality of wheels, the drive torque generated in association with the drive of the engine throttle.

With the traction control system having the above described configuration, the drive torque generated in association with the drive of the engine throttle is distributed to at least one from among the plurality of wheels by the drive torque distribution mechanism.

Also, the present invention proposes the traction control system having the above described configuration, wherein the drive torque distribution mechanism includes means which varies the ratio of the drive torque to successive values from 0 to 100.

With the traction control system having the above described configuration, the ratio of the drive torque is varied to successive values from 0 to 100 by the drive torque distribution mechanism. Accordingly, the drive torque of the plurality of wheels, having successive values, is distributed to the wheel.

Also, the present invention proposes the traction control system having the above described configuration, wherein: the sensor unit includes means which senses a third acceleration generated in a direction of the rotation axis, converts the sensing result to a digital value, and transmits the digital value, included in the digital data, to the monitor apparatus; the monitor apparatus includes means which acquires the sensing result of the third acceleration; and the control means has means which controls the drive of a predetermined one from among each said drive actuator based on the sensing results of the first, second and third accelerations.

With the traction control system having the above described configuration, by use of the sensor unit, the third acceleration generated in a direction of the rotation axis is sensed, the sensing result is converted to a digital value, and the digital value, included in the digital data, is transmitted.

Further, by use of the monitor apparatus, the sensing result of the third acceleration is acquired; by use of the control means, the drive of a predetermined drive actuator from among each said drive actuator is controlled based on the sensing results of the first, second and third accelerations.

Here, the third acceleration varies according to the roll and lateral movement of the rotation mechanism section, for example, according to the roll of the body of rotation or wheel, and the lateral movement of the body of rotation or wheel caused by a steering wheel operation. Accordingly, the roll and lateral movement of the rotation mechanism section can be sensed from the sensing result of the third acceleration.

Also, the present invention proposes the traction control system having the above described configuration, wherein: the sensor unit includes means which senses a change of the second acceleration, means which senses the number of rotations per unit time based on the change of the second acceleration, and means which converts the sensed number of rotations to a digital value and transmits the digital value, included in the digital data, to the monitor apparatus; the monitor apparatus includes means which receives the digital value of the number of rotations from the sensor unit; and the control means has means which controls the drive of a predetermined one from among each said drive actuator based on the sensing results of the first, second and third accelerations and the sensing result of the number of rotations.

With the traction control system having the above described configuration, by use of the sensor unit, the change of the second acceleration is sensed, and at the same time the number of rotations per unit time is sensed based on the change of the second acceleration, and the sensed number of rotations is converted to a digital value, and the digital value, included in the digital data, is transmitted to the monitor apparatus. Accordingly, the process of sensing the number of rotations based on the second acceleration needs not to be performed in the monitor apparatus.

Also, the present invention proposes the traction control system having the above described configuration, wherein: the sensor unit includes means which senses a change of the first acceleration, means which senses the running speed based on the change of the first acceleration, and means which converts the sensed running speed to a digital value and transmits the digital value, included in the digital data, to the monitor apparatus; the monitor apparatus includes means which receives the digital value of the running speed from the sensor unit; and the control means has means which controls the drive of a predetermined one from among each saiddrive actuatorbased on the sensing results of the first, second and third accelerations and the sensing result of the running speed.

With the traction control system having the above described configuration, by use of the sensor unit, the change of the first acceleration is sensed, and at the same time the running speed is sensed based on the change of the first acceleration, the sensed running speed is converted to a digital value, and the digital value, included in the digital data, is transmitted to the monitor apparatus. Accordingly, the process of sensing the running speed based on the second acceleration needs not to be performed in the monitor apparatus.

Also, the present invention proposes the traction control system having the above described configuration, wherein the control means has means which controls the drive of a predetermined actuator from among each said drive actuator so that the difference of the number of rotations becomes equal to or smaller than the predetermined value, when the difference between the numbers of rotations sensed by two or more predetermined sensor units from among the plurality of sensor units is larger than a predetermined value.

With the traction control system having the above described configuration, by use of the control means, the drive of a predetermined actuator from among each said drive actuator is controlled so that the difference between the numbers of rotations sensed by two or more predetermined sensor units from among the plurality of sensor units becomes equal to or smaller than a predetermined value. Accordingly, the magnitude and distribution of the drive torque of the vehicle are controlled to reduce the difference of the number of rotations.

Also, the present invention proposes the traction control system having the above described configuration, wherein the control means has means which controls the drive of a predetermined actuator from among each said drive actuator so that the difference of the running speed becomes equal to or smaller than the predetermined value, when the difference between the running speeds sensed by two or more predetermined sensor units from among the plurality of sensor units is larger than a predetermined value.

With the traction control system having the above described configuration, by use of the control means, the drive of a predetermined actuator from among each said drive actuator is controlled so that the difference between the running speeds sensed by two ormore predetermined sensor units from among the plurality of sensor units becomes equal to or smaller than a predetermined value. Accordingly, the magnitude and distribution of the drive torque of the vehicle are controlled to reduce the difference of the running speed.

Also, the present invention proposes the traction control system having the above described configuration, wherein the sensor unit is disposed in the body of rotation.

With the traction control system having the above described configuration, the sensor unit is disposed not in the wheel but in the body of rotation for mounting the wheel provided in the vehicle body side, so it is possible to perform freely the replacement of a wheel, i.e., a wheel and tire.

Also, the present invention proposes the traction control system having the above described configuration, wherein: the sensor unit includes means which receives a radio wave of a first frequency, means which converts the energy of the received radio wave of the first frequency to electric drive energy, and means which is operated by the electric energy to transmit the digital data by use of a radio wave of a second frequency; and the monitor apparatus includes means which radiates the radio wave of the first frequency, means which receives the radio wave of a second frequency, and means which extracts the digital data from the received radio wave of the second frequency.

With the traction control system having the above described configuration, when a radio wave of a first frequency is radiated from the monitor apparatus to the sensor unit, the sensor unit, receiving the radio wave of a first frequency, converts the energy of the received radio wave of a first frequency to electric energy. Further the sensor unit is operated by the electric energy to sense each acceleration, convert the sensing result to a digital value and transmit the digital data including the digital value by use of a radio wave of a second frequency.

The radio wave of a second frequency transmitted from the sensor unit is received by the monitor apparatus; the digital value of the sensing result of each said acceleration is extracted from the received radio wave of a second frequency. Accordingly, any current power source needs not to be provided in the sensor unit.

Also, the present invention proposes the traction control system having the above described configuration, wherein the first frequency is identical to the second frequency.

With the traction control system having the above described configuration, an identical frequency is used as the first frequency and second frequency; transmitting and receiving are performed in a time multiplexed manner.

Also, the present invention proposes the traction control system having the above described configuration, wherein: the sensor unit includes storage means which has stored therein identification data unique to the self, and means which transmits the identification data included in the digital data; and the monitor apparatus includes means which identifies the rotation mechanism section based on the identification data.

With the traction control system having the above described configuration, the identification data unique to each sensor unit, stored in the storage means of the sensor unit, is transmitted from the sensor unit together with the sensing result. Thus the monitor apparatus can determine based on the identification data received from the sensor unit, from which rotation mechanism section sensor unit the digital data was transmitted. This allows the one monitor apparatus to identify the digital data transmitted from each of the plurality of sensor units.

Also, the present invention proposes the traction control system having the above described configuration, wherein the sensor unit includes a semiconductor acceleration sensor, having a silicon piezo diaphragm, for sensing accelerations orthogonal to each other.

With the traction control system having the above described configuration, the sensor unit, including a semiconductor acceleration sensor having a silicon piezo diaphragm, senses the accelerations orthogonal to each other by use of the semiconductor acceleration sensor.

Also, the present invention proposes the traction control system having the above described configuration, further comprising a number-of-rotations sensing mechanism, disposed in the rotation mechanism section, for sensing a first number of rotations per unit time associated with the rotation of the wheel and transmitting the sensing result to the monitor apparatus, wherein: the sensor unit includes means which senses a change of the second acceleration, means which senses a second number of rotations per unit time based on the change of the second acceleration, and means which converts the sensed second number of rotations to a digital value and transmits the digital value, included in the digital data, to the monitor apparatus; and the monitor apparatus includes means which receives the sensing result of the first number of rotations from the number-of-rotations sensing mechanism, means which receives the sensing result of the second number of rotations from the sensor unit, and determination means which determines whether or not the first number of rotations is identical to the second number of rotations.

With the traction control system having the above described configuration, the first number of rotations per unit time is sensed by the number-of-rotations sensing mechanism, and the sensing result is transmitted to the monitor apparatus; the change of the second acceleration is sensed by the sensor unit and at the same time the second number of rotations per unit time is sensed based on the change of the second acceleration, and the sensed second number of rotations is converted to a digital value, and the digital value, included in the digital data, is transmitted to the monitor apparatus. Accordingly, the process of sensing the second number of rotations based on the change of the second acceleration needs not to be performed in the monitor apparatus.

Further, by use of the monitor apparatus, the digital signal of the first number of rotations is received, and at the same time the digital value of the second number of rotations is received, and it is determined whether or not the first number of rotations is identical to the second number of rotations. Accordingly, it becomes possible to confirm the reliability of the digital data transmitted by the sensor unit, on which the second number of rotations is based.

Also, the present invention proposes the traction control system having the above described configuration, wherein the number-of-rotations sensing mechanism includes a disk, disposed in the body of rotation, which has multiple concaves and convexes spaced equally around the circumferential surface thereof, and means which generates magnetic field and senses a voltage associated with a change of the magnetic field.

With the traction control system having the above described configuration, a pulsed voltage is sensed by the number-of-rotations sensing mechanism, which is generated when the multiple concaves and convexes disposed in the circumferential surface of the disk traverse the magnetic field in association with rotation. Accordingly, by counting the number of pulsed voltages sensed within unit time, the first running speed per unit time can be calculated.

Also, the present invention proposes the traction control system having the above described configuration, wherein: the number-of-rotations sensing mechanism includes means which converts the sensing result of the first number of rotations to a digital signal; the monitor apparatus includes means which converts the sensing result of the second number of rotations to a digital signal; and the determination means has means which determines based on the digital signals of the first number of rotations and the secondnumber of rotations, whether or not the first number of rotations is identical to the second number of rotations.

With the traction control system having the above described configuration, the sensing result of the first number of rotations is converted to a digital signal by the number-of-rotations sensing mechanism; the digital value of the second number of rotations is converted to a digital signal by the monitor apparatus, and at the same time it is determined based on the digital signals of the first number of rotations and the second number of rotations, whether or not the first number of rotations is identical to the second number of rotations. Accordingly, the digital signals can be directly compared to each other, thus making the determination easy.

Also, the present invention proposes the traction control system having the above described configuration, wherein the conversion means has means which multiplies the digital value of the second number of rotations by a predetermined value and converts the digital value to a digital signal having a period being the reciprocal number of the multiplication value.

With the traction control system having the above described configuration, by use of the conversion means, the digital value of the second number of rotations is multiplied by a predetermined value and converted to a digital signal having a period being the reciprocal number of the multiplication value. Accordingly, in the digital signal of the second number of rotations, a vibration of a predetermined value per one rotation of the wheel is generated.

Also, the present invention proposes the traction control system having the above described configuration, wherein the determination means has means which determines that the first number of rotations is identical to the second number of rotations, when a vibration of the digital signal of the second number of rotations is generated every predetermined multiple of the period of the digital signal of the first number of rotations.

With the traction control system having the above described configuration, when the vibration of the digital signal of the second number of rotations is generated every predetermined multiple of the period of the digital signal of the first number of rotations, it is determined by the determination means that the first number of rotations is identical to the second number of rotations. Accordingly, the reliability of the digital data transmitted by the sensor unit, on which the second number of rotations is based, can be secured.

Also, the present invention proposes the traction control system having the above described configuration, further comprising a number-of-rotations sensing mechanism, disposed in the rotation mechanism section, for sensing a first running speed per unit time associated with the rotation of the wheel and transmitting the sensing result to the monitor apparatus, wherein: the sensor unit includes means which senses the change of the first acceleration, means which senses a second running speed per unit time based on the change of the first acceleration, and means which converts the sensed second running speed to a digital value and transmits the digital value, included in the digital data, to the monitor apparatus; and the monitor apparatus includes means which receives the sensing result of the first running speed from the number-of-rotations sensing mechanism, means which receives the sensing result of the second running speed from the sensor unit, and determination means which determines whether or not the first running speed is identical to the second running speed.

With the traction control system having the above described configuration, by use of the number-of-rotations sensing mechanism, the first running speed per unit time is sensed, and the sensing result is transmitted to the monitor apparatus; by use of the sensor unit, the change of the first acceleration is sensed, and at the same time the second running speed per unit time is sensed based on the change of the first acceleration, and the sensed second running speed is converted to a digital value, and the digital value, included in the digital data, is transmitted to the monitor apparatus. Accordingly, the process of sensing the second running speed based on the change of the first acceleration needs not to be performed in the monitor apparatus.

Also, the present invention proposes the traction control system having the above described configuration, wherein the number-of-rotations sensing mechanism includes a disk, disposed in the body of rotation, having multiple concaves and convexes spaced equally around the circumferential surface thereof, and means which generates magnetic field and senses a voltage associated with a change of the magnetic field.

With the traction control system having the above described configuration, a pulsed voltage is sensed by the number-of-rotations sensing mechanism, which is generated when the multiple concaves and convexes disposed in the circumferential surface of the disk traverse the magnetic field in association with rotation. Accordingly, by counting the number of pulsed voltages sensed within unit time, the first running speed per unit time can be calculated.

Further, by use of the monitor apparatus, the digital signal of the first running speed is received, and at the same time the digital value of the second running speed is received, and it is determined whether or not the first running speed is identical to the second running speed. Accordingly, it becomes possible to confirm the reliability of the digital data transmitted by the sensor unit, on which the second running speed is based.

Also, the present invention proposes the traction control system having the above described configuration, wherein: the number-of-rotations sensing mechanism includes means which converts the sensing result of the first running speed to a digital signal; the monitor apparatus includes means which converts the sensing result of the second running speed to a digital signal; and the determination means has means which determines based on the digital signals of the first running speed and the second running speeds, whether or not the first running speed is identical to the second running speed.

With the traction control system having the above described configuration, the sensing result of the first running speed is converted to a digital signal by the number-of-rotations sensing mechanism; the digital value of the second running speed is converted to a digital signal by the monitor apparatus, and at the same time it is determined based on the digital signals of the first running speed and the second running speed, whether or not the first running speed is identical to the second running speed. Accordingly, the digital signals can be directly compared to each other, thus making the determination easy.

Also, the present invention proposes the traction control system having the above described configuration, wherein the conversion means has means which multiplies the digital value of the second running speed by a predetermined value and converts the digital value to a digital signal having a period being the reciprocal number of the multiplication value.

With the traction control system having the above described configuration, by use of the conversion means, the digital value of the second running speed is multiplied by a predetermined value and converted to a digital signal having a period being the reciprocal number of the multiplication value. Accordingly, in the digital signal of the second running speed, a vibration of a predetermined value per one rotation of the wheel is generated.

Also, the present invention proposes the traction control system having the above described configuration, wherein the determination means has means which determines that the first running speed is identical to the second running speed, when the vibration of the digital signal of the second running speed is generated every predetermined multiple of the period of the digital signal of the first running speed.

With the traction control system having the above described configuration, when the vibration of the digital signal of the second running speed is generated every predetermined multiple of the period of the digital signal of the first running speed, it is determined by the determination means that the first running speed is identical to the second running speed. Accordingly, the reliability of the digital data transmitted by the sensor unit, on which the second running speed is based, can be secured.

To achieve the above object, the present invention proposes a sensor unit which senses an acceleration generated in association with rotation, disposed in a rotation mechanism section including a body of rotation positioned in the vehicle body side, for securing a wheel and allowing the wheel to rotate, and the wheel, the sensor unit being included in a traction control system for a vehicle which is constituted so as to drive an engine throttle drive actuator according to a result of sensing an accelerator operation state of the vehicle and thereby cause a target drive force to be generated, the sensor unit comprising: means which senses a first acceleration generated in association with rotation in a direction orthogonal to the rotation axis, and a second acceleration generated in a direction of rotation; means which converts the sensing results of the first acceleration and the second acceleration to a digital value; and means which transmits digital data including the digital value.

With the sensor unit having the above described configuration, the first acceleration generated in association with rotation in a direction orthogonal to the rotation axis, and the second acceleration generated in a direction of rotation are sensed, and the sensing result is converted to a digital value, and the digital data including the digital value is transmitted.

Here, as the number of rotations in the rotation mechanism section increases, centrifugal force becomes larger. Thus, as the number of rotations increases, the first acceleration becomes larger. Also, in association with the number of rotations, the position of the sensor unit moves, and the direction of gravity acceleration applied to the sensor unit varies. Consequently, the magnitude of the second acceleration in the sensor unit varies in a sinusoidal waveform in association with rotation, and at the same time the period of the variation becomes shorter as the number of rotations increases. Accordingly, the speed of the vehicle can be determined from the sensing result of the first acceleration, and the number of rotations per unit time of the wheel can be determined from the sensing result of the second acceleration.

### ADVANTAGES OF THE INVENTION

With the traction control system according to the present invention, the accelerations in three directions orthogonal to each other generated by the rotation of the wheel etc. in the rotation mechanism section can be sensed. Accordingly, by using the accelerations to control the drive of a vehicle, it is possible to perform the control in a short time period and based on highly accurate data. Also, the amount of distortion of a tire, the skid of a vehicle body, and the slip etc. of a wheel can be estimated from the accelerations. Accordingly, by using them to control the drive of a vehicle, it is possible to perform a more advanced control. Also, by confirming the number of rotations and the running speed obtained based on the above accelerations by use of a conventional number-of-rotations sensing mechanism, the reliability of the accelerations can be secured.

With the sensor unit of the present invention, only by arranging the sensor unit at a predetermined position in a wheel including a rim, wheel and tire main body, or a body of rotation, such as an axle, it is possible to easily sense the accelerations generated vertically, longitudinally and laterally by the rotation of the wheel.

The above-mentioned object, other objects, characteristics, and advantages of the present invention will become apparent by reference to the following description and the accompanying drawings.

### BRIEFLY DESCRIBE OF THE DRAWINGS

Figure 1 is a schematic configuration diagram showing a drive control apparatus for a vehicle in a traction control system according to a first embodiment of the'present invention;
Figure 2 is a view for explaining a mounting state of a sensor unit and monitor apparatus according to the first embodiment of the present invention;
Figure 3 is a view for explaining a mounting state of the sensor unit according to the first embodiment of the present invention;
Figure 4 is a view for explaining another mounting state of the sensor unit according to the first embodiment of the present invention;
Figure 5 is a configuration diagram showing an electrical circuit of the sensor unit according to the first embodiment of the present invention;
Figure 6 is an external perspective diagram showing a semiconductor acceleration sensor according to the first embodiment of the present invention;
Figure 7 is a cross-sectional view observed from the arrow direction along the line B-B of Figure 6;
Figure 8 is a cross-sectional view observed from the arrow direction along the line C-C of Figure 6;
Figure 9 is an exploded perspective diagram showing the semiconductor acceleration sensor according to the first embodiment of the present invention;
Figure 10 is a configuration diagram showing an electrical circuit of the semiconductor acceleration sensor according to the first embodiment of the present invention;
Figure 11 is a view showing a bridge circuit which senses an acceleration in a direction of the X axis by use of the semiconductor acceleration sensor according to the first embodiment of the present invention;
Figure 12 is a view showing a bridge circuit which senses an acceleration in a direction of the Y axis by use of the semiconductor acceleration sensor according to the first embodiment of the present invention;
Figure 13 is a view showing a bridge circuit which senses an acceleration in a direction of the Z axis by use of the semiconductor acceleration sensor according to the first embodiment of the present invention;
Figure 14 is a view for explaining the operation of the semiconductor acceleration sensor according to the first embodiment of the present invention;
Figure 15 is a view for explaining the operation of the semiconductor acceleration sensor according to the first embodiment of the present invention;
Figure 16 is a view for explaining the acceleration in the directions of the X axis, Y axis and Z axis sensed by the acceleration sensor of the sensor unit according to the first embodiment of the present invention;
Figure 17 is a configuration diagram showing an electrical circuit of the monitor apparatus according to the first embodiment of the present invention;
Figure 18 is a schematic configuration diagram showing another drive control apparatus according to the first embodiment of the present invention;
Figure 19 is a configuration diagram showing an electrical circuit of the monitor apparatus according to the first embodiment of the present invention;
Figure 20 is a view showing the measurement result of the acceleration in a direction of the Z axis according to the first embodiment of the present invention;
Figure 21 is a view showing the measurement result of the acceleration in a direction of the Z axis according to the first embodiment of the present invention;
Figure 22 is a view showing the measurement result of the acceleration in a direction of the Z axis according to the first embodiment of the present invention;
Figure 23 is a view showing the measurement result of the acceleration in a direction of the X axis according to the first embodiment of the present invention;
Figure 24 is a view showing the measurement result of the acceleration in a direction of the X axis according to the first embodiment of the present invention;
Figure 25 is a view showing the measurement result of the acceleration in a direction of the X axis according to the first embodiment of the present invention;
Figure 26 is a view showing the measurement result of the acceleration in a direction of the Y axis according to the first embodiment of the present invention;
Figure 27 is a view showing the measurement result of the acceleration in a direction of the Y axis according to the first embodiment of the present invention;
Figure 28 is a view showing a flowchart for eliminating the slip of a two-wheel drive vehicle according to the first embodiment of the present invention;
Figure 29 is a view showing a flowchart for eliminating the slip of a four-wheel drive vehicle according to the first embodiment of the present invention;
Figure 30 is a schematic configuration diagram showing a drive torque distribution mechanism according to the first embodiment of the present invention;
Figure 31 is a conceptual view for explaining time constants in vehicle management;
Figure 32 is a view for explaining a conventional number-of-rotations sensing mechanism for a wheel;
Figure 33 is a view for explaining the conventional number-of-rotations sensing mechanism for a wheel;
Figure 34 is a view showing the relationship between a first number of rotations and the number of pulses according to a second embodiment of the present invention;
Figure 35 is a schematic configuration diagram showing a drive control apparatus for a vehicle according to the second embodiment of the present invention;
Figure 36 is a configuration diagram showing an electrical circuit of a monitor apparatus according to the second embodiment of the present invention;
Figure 37 is a view showing the relationship between a second number of rotations and the output voltage according to the second embodiment of the present invention;
Figure 38 is a view showing the relationship between the output voltage and the number of pulses according to the second embodiment of the present invention;
Figure 39 is a view for explaining the relationship between the pulse signal of the first number of rotations and the pulse signal of the second number of rotations according to the second embodiment of the present invention;
Figure 40 is a view for explaining the relationship between the pulse signal of the first number of rotations and the pulse signal of the second number of rotations according to the second embodiment of the present invention;
Figure 41 is a view for explaining the relationship between the pulse signal of the first number of rotations and the pulse signal of the second number of rotations according to the second embodiment of the present invention;
Figure 42 is a view showing the relationship between a first running speed and the number of pulses according to a third embodiment of the present invention;
Figure 43 is a schematic configuration diagram showing a drive control apparatus for a vehicle according to the third embodiment of the present invention;
Figure 44 is a configuration diagram showing an electrical circuit of a monitor apparatus according to the third embodiment of the present invention;
Figure 45 is a view showing the relationship between a second running speed and the output voltage according to the third embodiment of the present invention; and
Figure 46 is a view showing the relationship between the output voltage and the number of pulses according to the third embodiment of the present invention.

### DESCRIPTION OF THE SYMBOLS

1 ... rotor, 2 ... pickup sensor, 100 ... sensor unit, 110 ... antenna, 120 ... antenna changeover switch, 130 ... rectifier circuit, 131,132 ... diode, 133 ... capacitor, 134 ... resistive element, 140 ... central processing section, 141 ... CPU, 142 ... D/A conversion circuit, 143 ... storage section, 150 ... detecting section, 151 ... diode, 152 ... A/D conversion circuit, 160 ... transmitting section, 161 ... oscillation circuit, 162 ... modulation circuit, 163 ... high frequency amplifying circuit, 170 ... sensor section, 171 ... acceleration sensor, 172 ...A/D conversion circuit, 173 ... pressure sensor, 174 ... A/D converter circuit, 200, 200A, 200B ... monitor apparatus, 210 ... radiation unit, 211 ... antenna, 212 ... transmitting section, 220 ... wave receiving unit, 221 ... antenna, 222 ... detecting section, 230 ... control section, 240 ... arithmetic processing section, 250 ... operating section, 260 ... converting section, 261 ... F/V conversion circuit, 262 ... voltage control oscillation circuit, 270 ... determining section, 300 ... tire, 301 ... cap tread, 302 ... under tread, 303A,303B ... belt, 304 ... carcass, 305 ... tire main body, 306 ... rim, 400 ... tire house, 410 ... engine, 411 ... acceleratorpedal, 412 ... sub-throttle actuator, 413 ... main throttle position sensor, 414 ... sub- throttle position sensor, 500 ... rotation mechanism section, 510 ... axle, 520 ... brake disk, 530 ... wheel carrier, 600 ... transfer, 601 ... piston, 602 ... multi-plate clutch, 603 ... chain, 610 ... front propeller shaft, 620 ... rear propeller shaft, 630 ... transmission, 640 ... transfer actuator, 650 ... front differential, 660 ... rear differential, 700 ... drive control unit, 10 ... semiconductor acceleration sensor, 11 ... pedestal, 12 ... silicon substrate, 12a ... wafer outer-circumferential frame section, 13 ... diaphragm, 13a to 13d ... diaphragm piece, 14 ... thick film section, 15 ... plumb bob, 18A, 18B ... support body, 181 ... outer frame section, 182 ... supporting column, 183 ... beam section, 184 ... protrusion section, 184a ... protrusion- section end, 191 ... electrode, 31A to 31C ... voltage sensing unit, 32A to 32C ... direct current power source, Rx1 to Rx4, Ry1 to Ry4, Rz1 to Rz4 ... piezo resistive element (diffusion resistive element)

### BEST MODE FOR CARRYING OUT THE INVENTION

A traction control system according to an embodiment of the present invention will be described with reference to the drawings.

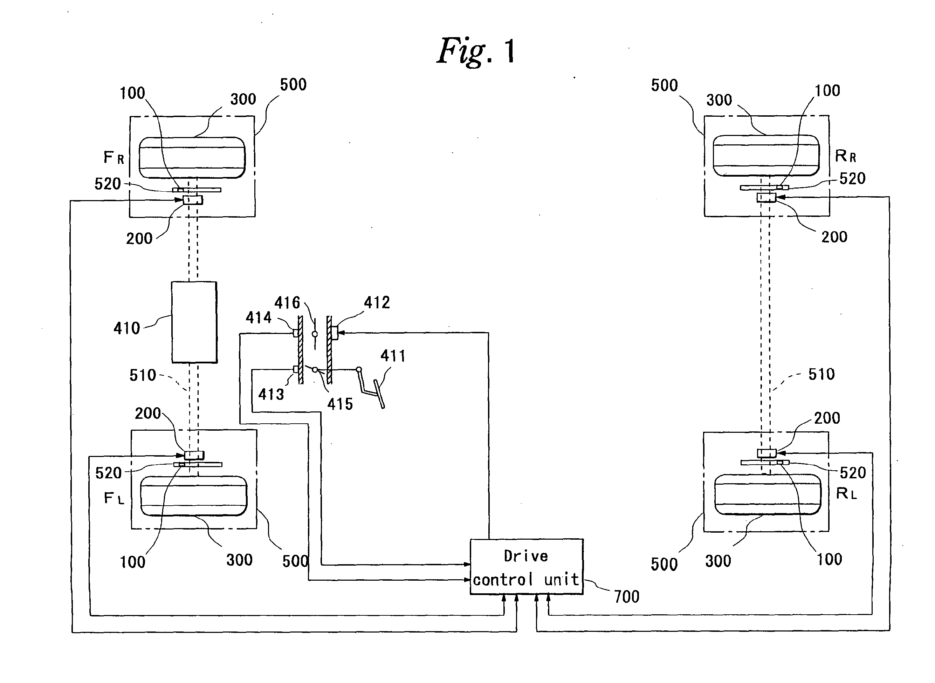

Figure 1 is a schematic configuration diagram showing a drive control apparatus for a four-wheel vehicle in a traction control system according to a first embodiment of the present invention. In the drawing, reference numeral 100 denotes a sensor unit, 200 denotes a monitor apparatus, 300 denotes a tire, 410 denotes an engine, 411 denotes an accelerator pedal, 412 denotes a sub-throttle actuator, 413 denotes a main throttle position sensor, 414 denotes a sub- throttle position sensor, 415 denotes a main throttle, 416 denotes a sub-throttle, 500 denotes a rotation mechanism section, 510 denotes an axle, 520 denotes a brake disk, and 700 denotes a drive control unit.

In the present embodiment, a tire state sensing apparatus of the present invention is constituted of the above described multiple sensor units 100 and monitor apparatuses 200.

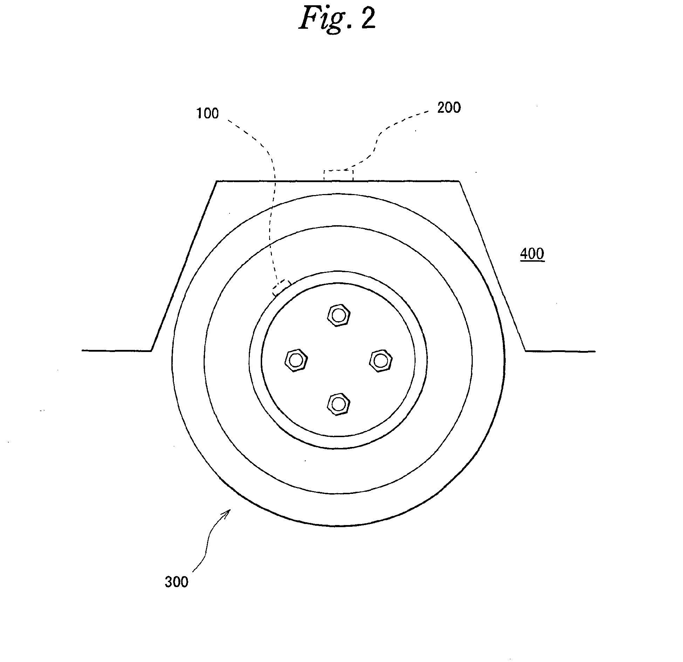

As shown in Figure 2, the sensor unit 100 is secured within each tire 300 of the vehicle; further the monitor apparatus 200 is secured in a tire house 400 of each tire 300.

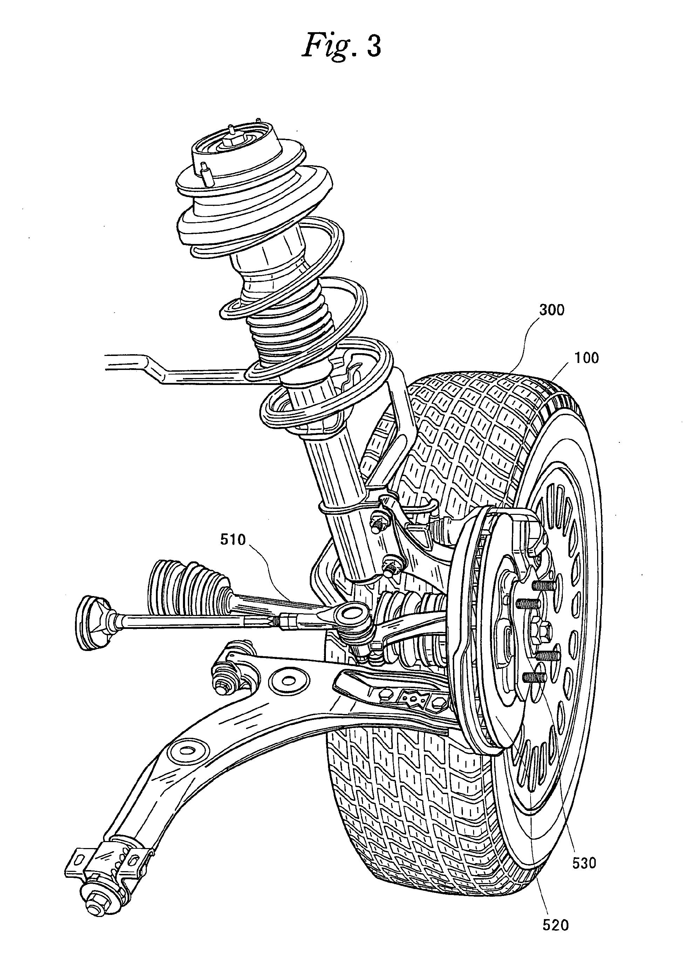

As shown in Figure 3, the rotation mechanism section 500 includes a brake disk 520 rotating together with an axle 510, a wheel carrier 530 for securing a wheel of the tire 300, and a body of rotation, such as a tire main body and rim.

The drive control unit 700, constituted of a control circuit provided with a known CPU, receives the sensing results outputted from the throttle position sensors 413 and 414 and the monitor apparatus 200 to thereby perform the drive control.

Specifically, the accelerator pedal 411 is pushed down to open the main throttle 415, whereby fuel is sent into the engine 410 to increase the output of the engine 410. Based on the sensing result of the main throttle position sensor 413 and the sensing result outputted from the monitor apparatus 200, the drive control unit 700 drives electrically the sub-throttle 416 and thereby performs an automatic control to prevent slips in the tire 300.

As shown in Figures 2 and 3, the sensor unit 100 is secured to, for example, a predetermined position of the brake disk 520 rotating together with the tire 300. By using a later-described acceleration sensor disposed within the sensor unit 100, accelerations in three directions orthogonal to each other caused by rotation of the tire 300 are sensed, and the sensed accelerations are converted to a digital value. Further, digital data including the digital value of the sensed accelerations is generated and transmitted.

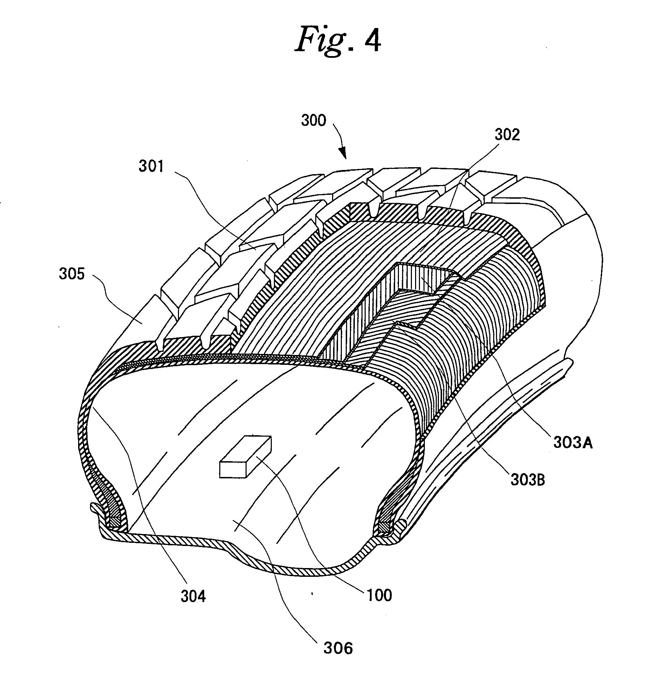

In the present embodiment, the sensor unit 100 is secured to the brake disk 520. However, the position is not limited thereto; the sensor unit may be secured to a part such as the axle 510 or rotor (not shown) which is positioned in the body of rotation. For example, as shown in Figure 4, the sensor unit may be secured to the rim 306. In the drawing, the tire 300 is, for example, a known tubeless radial tire; in the present embodiment, the tire includes a wheel and rim. The tire 300 is constituted of the tire main body 305, rim 306 and wheel (not shown) ; the tire main body 305 is constituted of a known cap tread 301, under tread 302, belts 303A and 303B, carcass 304, and so on.

The number of the sensor units 100 disposed in each rotation mechanism section 500 is not limited to one; two or more sensor units may be disposed to be used as an auxiliary or the like.

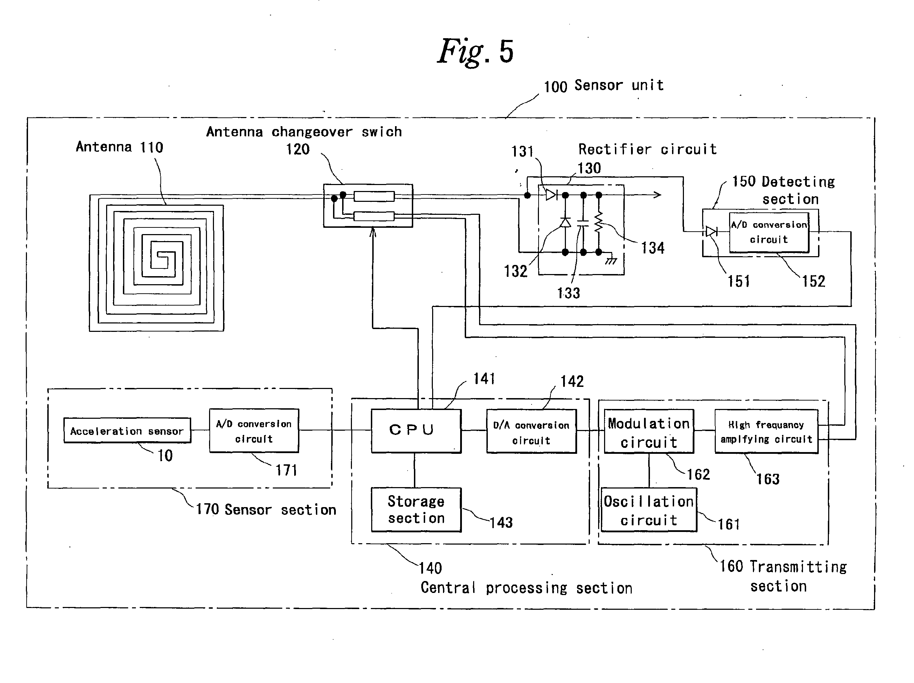

Specific examples of the electrical circuit of the sensor unit 100 include a circuit shown in Figure 5. In the specific example shown in Figure 5, the sensor unit 100 is constituted of an antenna 110, antenna changeover switch 120, rectifier circuit 130, central processing section 140, detecting section 150, transmitting section 160 and sensor section 170.

The antenna 100, used to communicate with the monitor apparatus 200 by use of radio wave, is adjusted to a predetermined frequency (a first frequency) of, for example, 2.4 GHz band.

The antenna changeover switch 120, constituted of, for example, an electric switch etc., performs under the control from the central processing section 140, the changeover between the connection of the antenna 110 to the rectifier circuit 130 and detecting section 150, and the connection of the antenna 110 to the transmitting section 160.

The rectifier circuit 130, constituted of diodes 131 and 132, capacitor 133 and resistor 134, constitutes a known full-wave rectifier circuit. The antenna 110 is connected to the input side of the rectifier circuit 130 via the antenna changeover switch 120. The rectifier circuit 130 rectifies a high-frequency current induced in the antenna 110, converts the resultant current to a direct current, and outputs this current as the drive electric power source for the central processing section 140, detecting section 150, transmitting section 160 and sensor section 170.

The central processing section 140 is constituted of a known CPU 141, digital/analog (hereinafter referred to as D/A) conversion circuit 142, and storage section 143.

The CPU 141 operates based on a program stored in a semiconductor memory of the storage section 143. When being supplied with electric energy to be driven, the CPU 141 generates digital data including the digital value being the sensing result of acceleration acquired from the sensor section 170 and later-described identification data, and transmits this digital data to the monitor apparatus 200. In the storage section 143, there is preliminarily stored the identification data specific to the sensor unit 100.

The storage section 143 is constituted of a ROM having stored therein the program for operating the CPU 141, and an electrically rewritable nonvolatile semiconductor memory such as EEPROM (electrically erasable programmable read-only memory). The above described identification data specific to each sensor unit 100 is preliminarily stored in a non-rewritable area within the storage section 143 during manufacture.

The detecting section 150 is constituted of a diode 151 and A/D converter 152; the anode of the diode 151 is connected to the antenna 110, and the cathode is connected to the CPU 141 of the central processing section 140 via the A/D converter 152. Accordingly, the radio wave received by the antenna 110 is detected by the detecting section 150, and at the same time a signal obtained by detecting the radio wave is converted to a digital signal to be supplied to the CPU 141.

The transmitting section 160, constituted of an oscillation circuit 161, modulation circuit 162 and high-frequency amplifying circuit 163, modulates in the modulation circuit 162, a carrier wave of a frequency of 2.45 GHz band generated by the oscillation circuit 161 composed of a known PLL circuit etc. based on a data signal received from the central processing section 140, and supplies as a high-frequency current of a frequency (a second frequency) of 2.45 GHz band, the resultant signal to the antenna 110 via the high-frequency amplifying circuit 163 and antenna changeover switch 120. In the present embodiment, the first frequency and second frequency are set to the same frequency. However, the first frequency may be different from the second frequency.

The sensor section 170 is constituted of an acceleration sensor 10 and A/D conversion circuit 171.

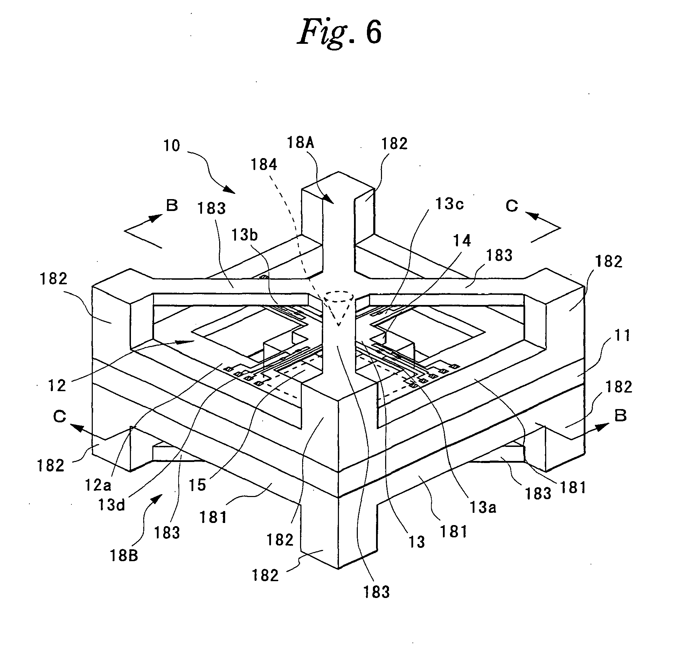

The acceleration sensor 10 is constituted of a semiconductor acceleration sensor as shown in Figures 6 to 9.

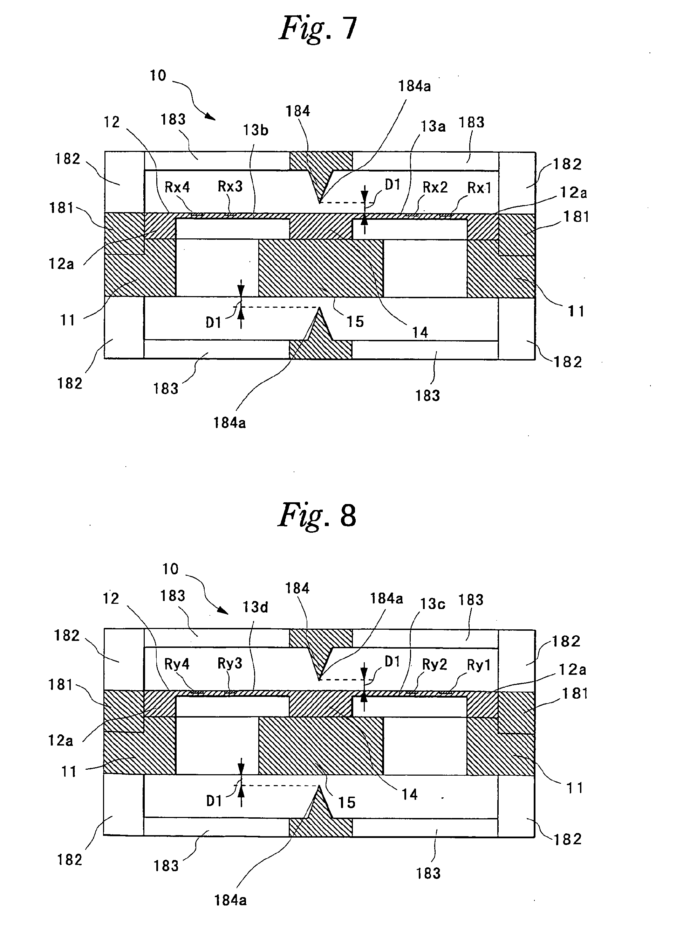

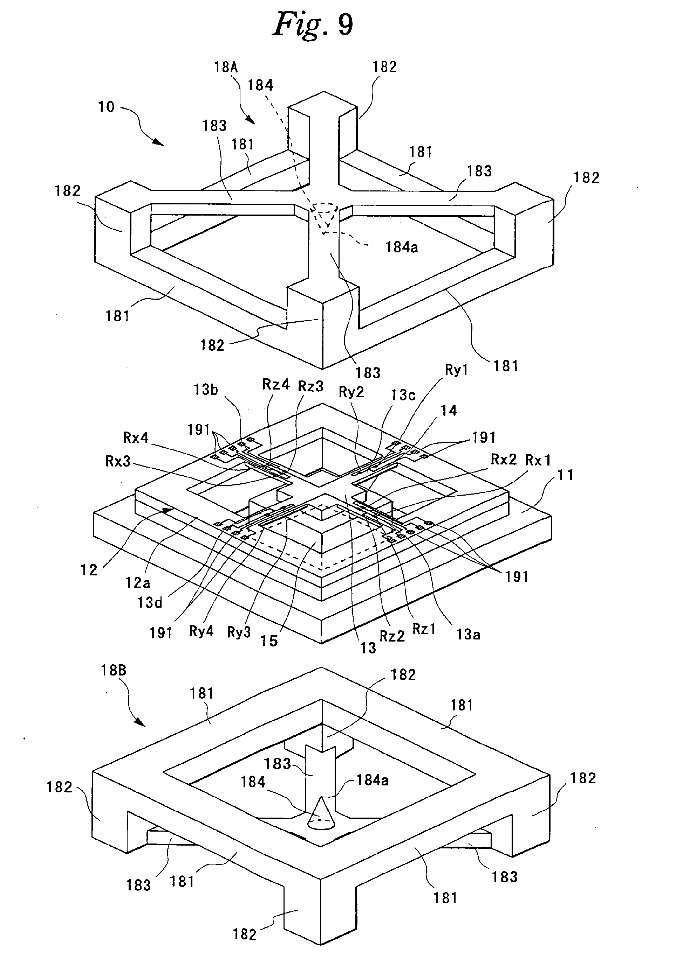

Figure 6 is an external perspective diagram showing a semiconductor acceleration sensor according to the first embodiment of the present invention. Figure 7 is a cross-sectional view observed from the arrow direction along the line B-B of Figure 6. Figure 8 is a cross-sectional view observed from the arrow direction along the line C-C of Figure 6. Figure 9 is an exploded perspective diagram.

Referring to the drawings, reference numeral 10 denotes a semiconductor acceleration sensor which is constituted of a pedestal 11, silicon substrate 12 and support bodies 18A and 18B.

The pedestal 11 has a rectangular frame shape. On one opening surface of the pedestal 11, there is mounted the silicon substrate 12 (silicon wafer). In the outer-circumferential section of the pedestal 11, there is secured an outer frame section 181 of the support bodies 18A and 18B.

In the opening of the pedestal 11, there is disposed the silicon substrate 12; in the central part within the wafer outer-circumferential frame section 12a, there is formed a diaphragm 13 of thin film having a cross shape; on the upper surface of each of the diaphragm pieces 13a to 13d, there are formed piezo resistive elements (diffusion resistive elements) Rx1 to Rx4, Ry1 to Ry4, Rz1 to Rz4.

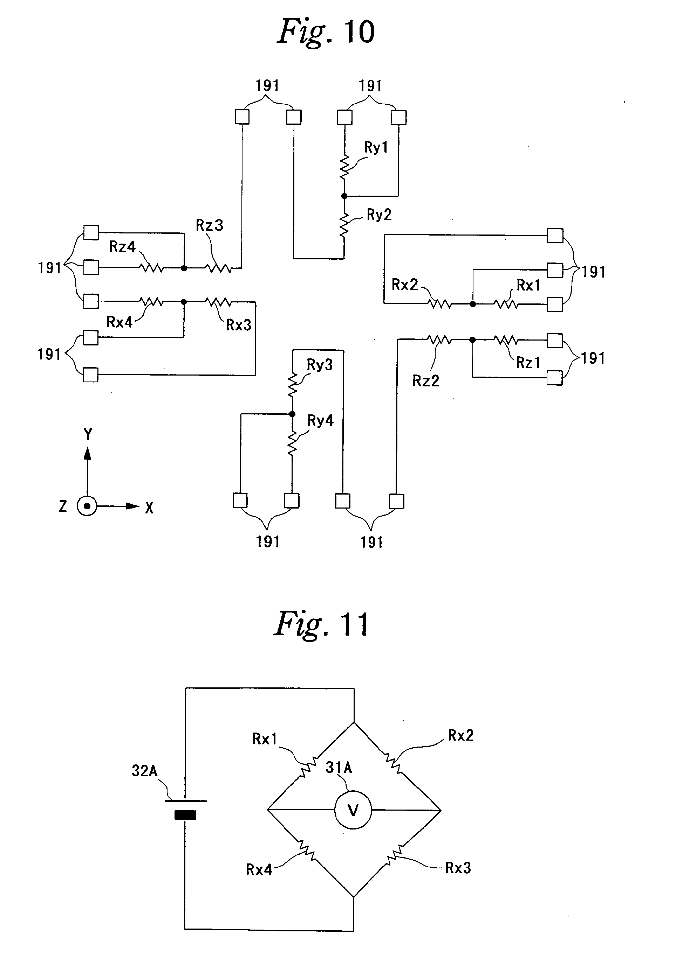

More specifically, of the diaphragm pieces 13a and 13b disposed in alignment, in one diaphragm piece 13a, there are formed the piezo resistive elements Rx1, Rx2, Rz1 and Rz2; in the other diaphragm piece 13b, there are formed the piezo resistive elements Rx3, Rx4, Rz3 and Rz4. Also, of the diaphragm pieces 13c and 13d disposed in alignment orthogonal to the diaphragm pieces 13a and 13b, in one diaphragm piece 13c, there are formed the piezo resistive elements Ry1 and Ry2; in the other diaphragmpiece 13d, there are formed the piezo resistive elements Ry3 and Ry4. Further, these piezo resistive elements Rx1 to Rx4, Ry1 to Ry4, and Rz1 to Rz4 are connected as shown in Figure 10 so that they can constitute a resistive element bridge circuit for sensing accelerations in the directions of the X axis, Y axis and Z axis orthogonal to each other. The piezo resistive elements Rx1 to Rx4, Ry1 to Ry4, and Rz1 to Rz4 are connected to connection electrodes 191 disposed on the surface of the outer-circumferential section of the silicon substrate 12.

Further, on one face side of the central part of the diaphragm 13 in the crossing section of the diaphragm pieces 13a to 13d, there is formed a thick film section 14; on the surface of the thick film section 14, there is mounted a plumb bob 15 having a rectangular solid shape, made of, for example, glass.

Each of the above described support bodies 18A and 18B is constituted of an outer frame section 181 having a rectangular frame shape, four supporting columns 182 installed in the four corners of the fixed section, a beam section 183 having a cross shape disposed so as to join the apical ends of each supporting column, and a protrusion section 184 having a cone shape disposed in the central, crossing part of the beam section 183.

The outer frame section 181 is fit into the outer-circumferential section of the pedestal 11 to be secured, so that the protrusion section 184 is positioned in the other face side of the diaphragm 13, i.e., in the side where there is not the plumb bob 15. Here, a setting is made such that the end 184a of the protrusion section 184 is positioned at a distance D1 from the surface of the diaphragm 13 or plumb bob 15. The distance D1 is set to a value in which the displacement of each of the diaphragm pieces 13a to 13d can be limited by the protrusion section 184 so that the diaphragm pieces are not stretched excessively even when an acceleration is produced in a direction orthogonal to the face of the diaphragm 13 and a force of a predetermined value or more caused by the acceleration is exerted on both face sides of the diaphragm 13.

When the semiconductor acceleration sensor 10 having the above described configuration is used, three resistor bridge circuits are constructed as shown in Figures 11 to 13. Specifically, in a bridge circuit for sensing the acceleration in a direction of the X axis, as shown in Figure 11, the positive electrode of a direct current power source 32A is connected to a connection point between one end of a piezo resistive element Rx1 and one end of a piezo resistive element Rx2, and the negative electrode of the direct current power source 32A is connected to the connection point between one end of a piezo resistive element Rx3 and one end of a piezo resistive element Rx4. Further one end of a voltage sensing unit 31A is connected to the connection point between the other end of the piezo resistive element Rx1 and the other end of the piezo resistive element Rx4, and the other end of the voltage sensing unit 31A is connected to the connection point between the other end of the piezo resistive element Rx2 and the other end of the piezo resistive element Rx3.

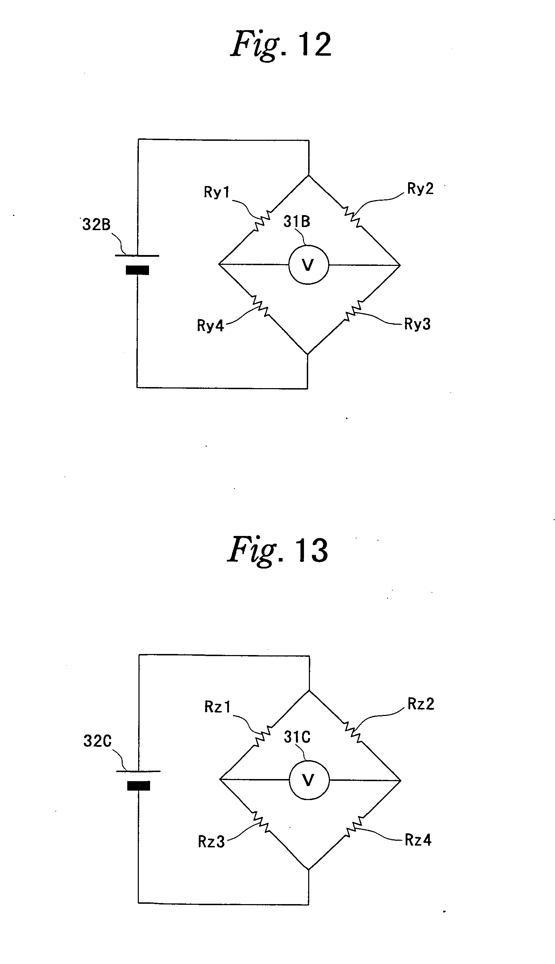

In a bridge circuit for sensing the acceleration in a direction of the Y axis, as shown in Figure 12, the positive electrode of a direct current power source 32B is connected to a connection point between one end of a piezo resistive element Ry1 and one end of a piezo resistive element Ry2, and the negative electrode of the direct current power source 32B is connected to the connection point between one end of a piezo resistive element Ry3 and one end of a piezo resistive element Ry4. Further one end of a voltage sensing unit 31B is connected to the connection point between the other end of the piezo resistive element Ry1 and the other end of the piezo resistive element Ry4, and the other end of the voltage sensing unit 31B is connected to the connection point between the other end of the piezo resistive element Ry2 and the other end of the piezo resistive element Ry3.

In a bridge circuit for sensing the acceleration in a direction of the Z axis, as shown in Figure 13, the positive electrode of a direct current power source 32C is connected to a connection point between one end of a piezo resistive element Rz1 and one end of a piezo resistive element Rz2, and the negative electrode of the direct current power source 32C is connected to the connection point between one end of a piezo resistive element Rz3 and one end of a piezo resistive element Rz4. Further one end of a voltage sensing unit 31C is connected to the connection point between the other end of the piezo resistive element Rz1 and the other end of the piezo resistive element Rz4, and the other end of the voltage sensing unit 31C is connected to the connection point between the other end of the piezo resistive element Rz2 and the other end of the piezo resistive element Rz3.

With the semiconductor acceleration sensor 10 having the above described configuration, when a force generated in association with acceleration applied to the sensor 10 is exerted on the plumb bob 15, distortions are produced in each of the diaphragm pieces 13a to 13d, whereby the values of the piezo resistive elements Rx1 to Rx4, Ry1 to Ry4 and Rz1 to Rz4 are varied. Accordingly, by forming the resistor bridge circuit with the piezo resistive elements Rx1 to Rx4, Ry1 to Ry4 and Rz1 to Rz4 disposed in each of the diaphragm pieces 13a to 13d, accelerations in the directions of the X axis, Y axis and Z axis orthogonal to each other can be sensed.

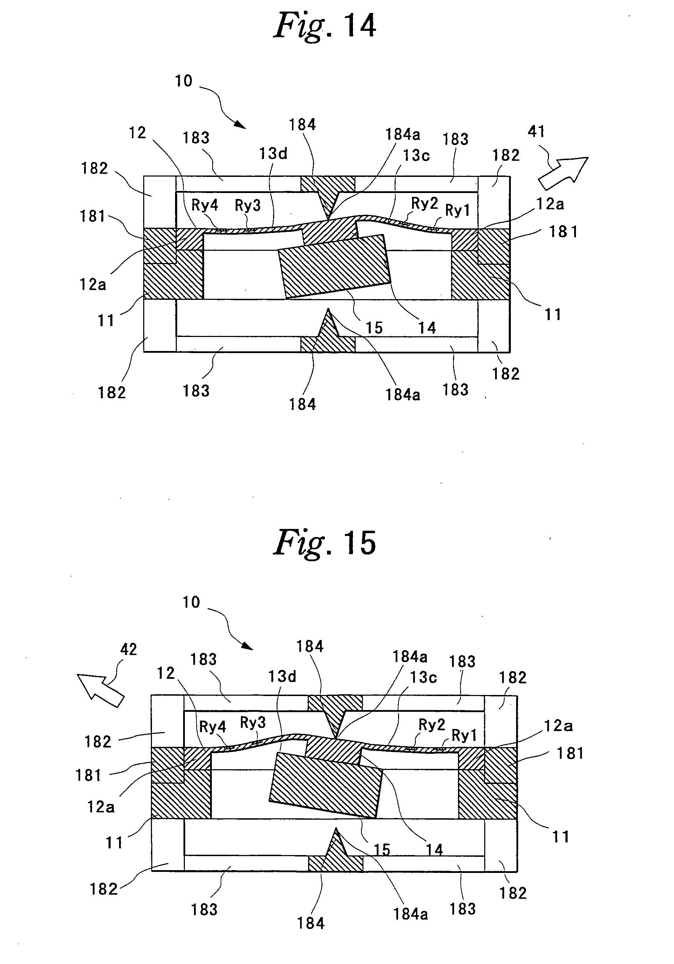

Further, as shown in Figures 14 and 15, in a case where there is applied an acceleration such that a force 41 or 42 including a force component in a direction orthogonal to the face of the diaphragm 13 is exerted, when a force of a predetermined value or more is exerted on the other face side of the diaphragm 13, the diaphragm 13 is distorted and stretched in a direction of the force 41 or 42 being exerted. However, the displacement is limited by being supported by the end 184a of the protrusion section 184, so each of the diaphragm pieces 13a to 13d cannot be stretched to a maximum. Accordingly, even when a force of a predetermined value or more is exerted on the other face side of the diaphragm 13, the position of the plumb bob 15 is varied with the end 184a of the protrusion section 184 working as the supporting point, so an acceleration in a direction parallel to the face of the diaphragm 13 can be sensed.

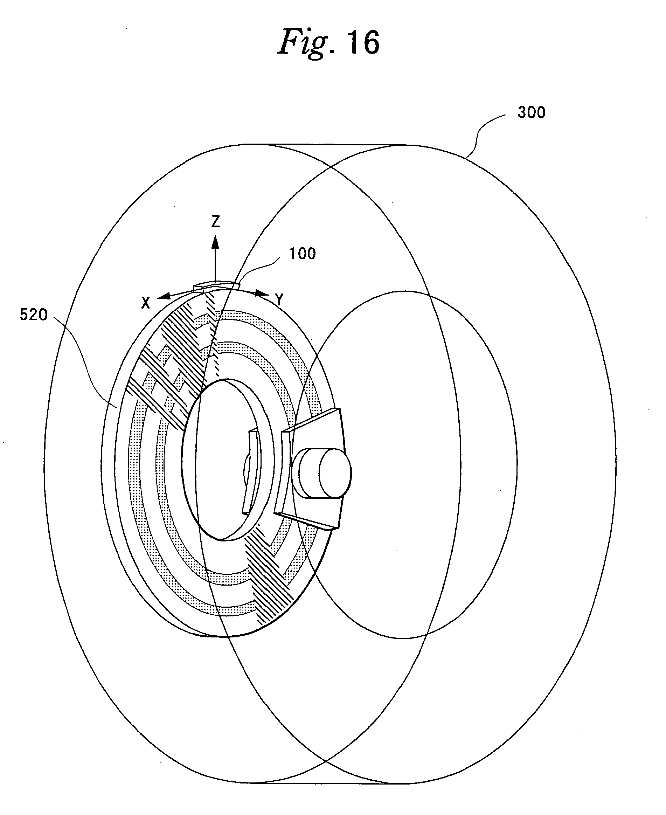

With the above described semiconductor acceleration sensor 10, as shown in Figure 16, when the vehicle is running with the tire 300 rotating, accelerations generated in the directions of the X axis, Y axis and Z axis orthogonal to each other in association with the rotation of the tire 300 can be sensed. Here, the sensor unit 100 is disposed so that the X axis corresponds to the direction of rotation of the tire 300, the Y axis corresponds to the direction of the rotation axis, and the Z axis corresponds to the direction orthogonal to the rotation axis. Accordingly, the acceleration associated with rotation can be highly accurately sensed without being subject to the effects of suspension etc. as with a sensor disposed in the vehicle side.

The A/D conversion circuit 171 converts an analog electrical signal outputted from the acceleration sensor 10 to a digital signal and outputs the digital signal to the CPU 141. The digital signal corresponds to the value of the above described accelerations in the directions of the X axis, Y axis and Z axis.

As the accelerations generated in the directions of the X axis, Y axis and Z axis, there are acceleration in a positive direction and acceleration in a negative direction. With the present embodiment, however, accelerations in both directions can be sensed.

Further, as described later, the number of rotations of a wheel can be determined from the acceleration in a direction of the X axis, and the running speed can be determined from the acceleration in a direction of the Z axis. It is also possible to calculate the number of rotations of a wheel per unit time in the central processing section 140 of the sensor unit 100 and transmit the digital value being the calculation result, included in the above described digital data.

With the present embodiment, as described above, a frequency of 2.45 GHz band is used as the first and second frequencies, whereby the effects of the belts 303A and 303B into which metal wire for reinforcing the tire 300 is weaved are reduced. Thus, even when the sensor unit 100 is secured to the rim 306, a stable communication is possible. In this way, in order to reduce the effects of metal within the tire, such as a metal wire for reinforcement, a frequency of 1 GHz or more is preferably used as the first and second frequencies.

It is also possible to embed the sensor unit 100 within the tire 300 during manufacture of the tire 300. Needless to say, in this case, IC chips and other constituent parts are designed so as to be able to bear sufficiently the heat during vulcanization.

As shown in Figures 1 and 2, the monitor apparatus 200 is secured to each tire house 400. As shown in Figure 1, each monitor apparatus 200 is connected to the drive control unit 700 via a cable, being operated by electric energy sent from the drive control unit 700.

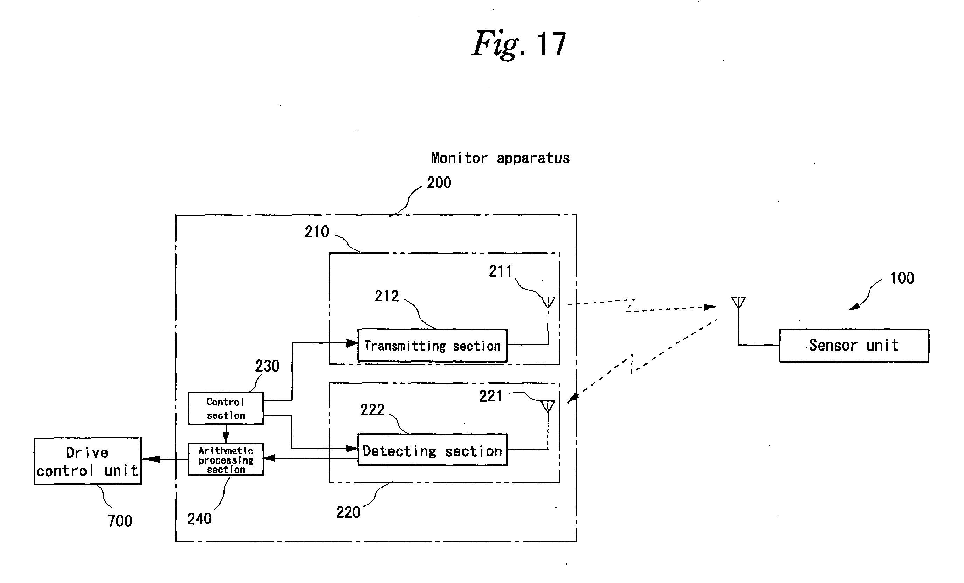

As shown in Figure 17, the electrical circuit of the monitor apparatus 200 is constituted of a radiation unit 210, wave receiving unit 220, control section 230 and arithmetic processing section 240. Each of the control section 230 and arithmetic processing section 240 is constituted of a known CPU, ROM having stored therein a program for operating the CPU, and memory circuit composed of RAM etc. required for performing arithmetic processing.

The radiation unit 210, constituted of a transmitting section 212 and antenna 211 for radiating a radio wave of a predetermined frequency (the first frequency) of 2.45 GHz band, radiates a radio wave of the first frequency from the antenna 211 based on the instruction from the control section 230.

Examples of the transmitting section 212 include a configuration composed of the oscillation circuit 161, modulation circuit 162 and high frequency amplifying circuit 163 similarly to the transmitting section 160 of the sensor unit 100. Accordingly, a radio wave of 2.45 GHz is radiated from the antenna 211. The high-frequency power outputted from the transmitting section 212 is set approximately to a value which makes it possible to supply electric energy from the antenna 211 of the monitor apparatus 200 for radiating radio wave to the sensor unit 100. Accordingly, each monitor apparatus 200 can sense accelerations of each tire 300.

The wave receiving unit 220, constituted of a detecting section 222 and antenna 221 for receiving a radio wave of a predetermined frequency (the second frequency) of 2.45 GHz band, detects a radio wave of the second frequency received by the antenna 221 based on the instruction from the control section 230, converts a signal obtained by detecting the radio wave to a digital signal and outputs the digital signal to the arithmetic processing section 240. Examples of the detecting section 222 include a circuit similar to the detecting section 150 of the sensor unit 100.

When electric energy is supplied from the drive control unit 700 to initiate the operation of the control section 230, the control section 230 drives the transmitting section 212 to cause it to radiate a radio wave only during a predetermined time period t1, and then drives the detecting section 222 during a predetermined time period t2 to cause the detecting section 222 to output a digital signal to the arithmetic processing section 240. Based on the digital signal, the arithmetic processing section 240 calculates the acceleration and outputs it to the drive control unit 700. Subsequently, the control section 230 repeats the similar process.

In the present embodiment, the radiation time period t1 and reception time period t2 in the monitor apparatus 200 are set to 0.15 ms and 0.30 ms, respectively. In the present embodiment, a radio wave is radiated from the radiation unit 210 only during the time period t1, whereby a voltage of 3 V or more can be stored as electric energy sufficient to drive the sensor unit 100. Accordingly, the monitor apparatus 200 can receive a larger amount of digital data than the conventional art at an interval of 10 msec or less required for performing an analysis of motion of a vehicle to carry out a drive control as described later.

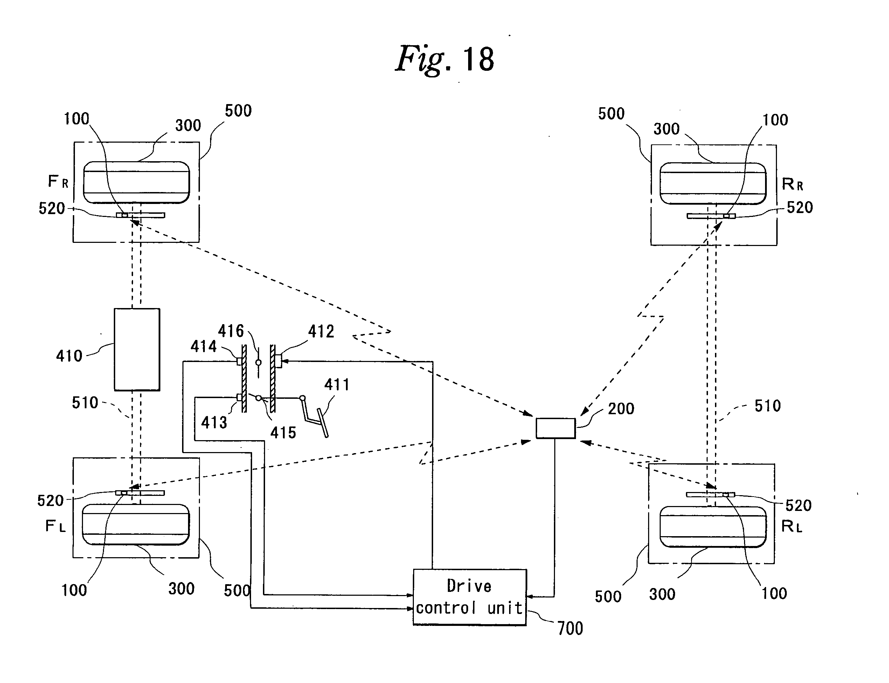

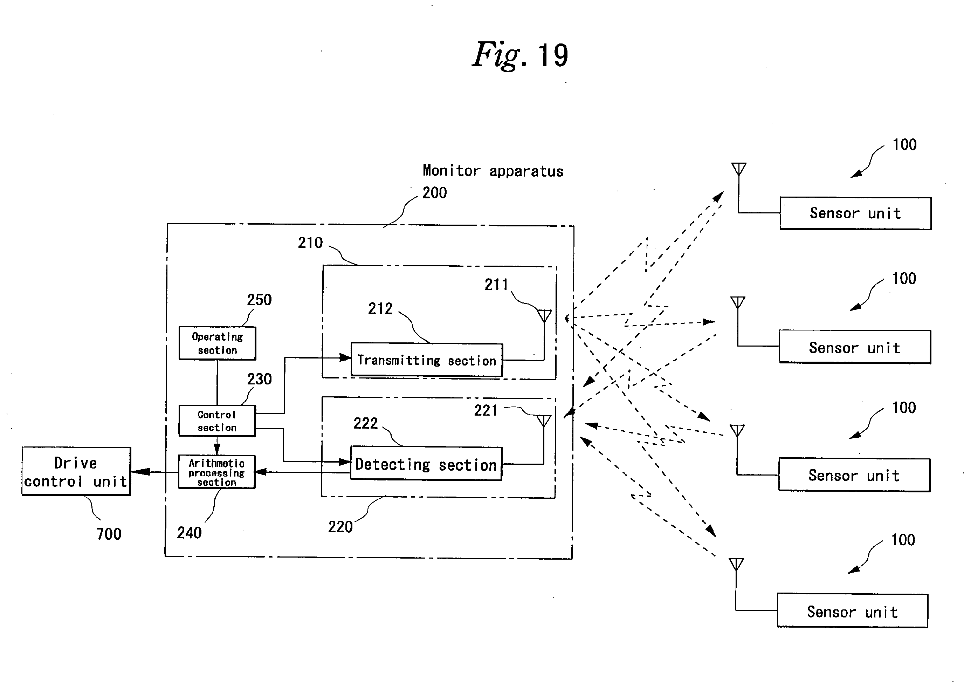

As shown in Figures 18 and 19, as another configuration of the sensor unit 100 and monitor apparatus 200, a single monitor apparatus 200 and sensor units 100 disposed in each rotation mechanism section 500 are used.

The program of the CPU 141 is set such that when receiving from the monitor apparatus 200, a data request instruction including the self identification data, the sensor unit 100 senses each acceleration and transmits the sensing result as the digital data including the self identification data.

The monitor apparatus 200 is provided with a operating section 250 for preliminarily storing in the control section 230, the identification data of the sensor unit 100 disposed in each tire 300. The program of the control section 230 is set such that the data request instruction including the self identification data of the sensor unit 100 is transmitted at a predetermined order or at random during the drive operation to the sensor unit 100 of all the tires 300 disposed in the vehicle. In outputting the sensing result to the drive control unit 700, sensingposition data representing the position of the rotation mechanism section 500 in the vehicle to which the sensing result corresponds, is outputted together with the sensing result.

With the above described configuration, the sensing results from all the sensor units 100 can be acquired by a single monitor apparatus 200.

In the drive control unit 700, there is stored distortion characteristic data preliminarily determined by measurement, such as experiments, representing the relationship between the amount of distortion of the tire 300 and the accelerations in the directions of the X axis, Y axis and Z axis acquired from the monitor apparatus 200. Further, based on the sensing result of the accelerations and the distortion characteristic data, the drive control unit 700 estimates the amount of distortion of each tire 300, and based on the estimated amount of distortion of the tire 300, controls the sub-throttle actuator 412 to drive the sub-throttle 416.

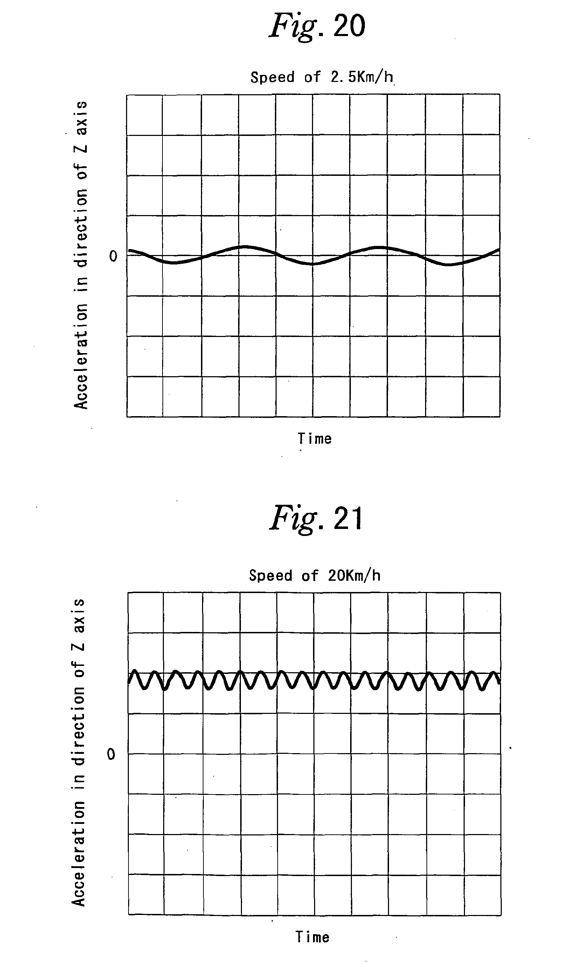

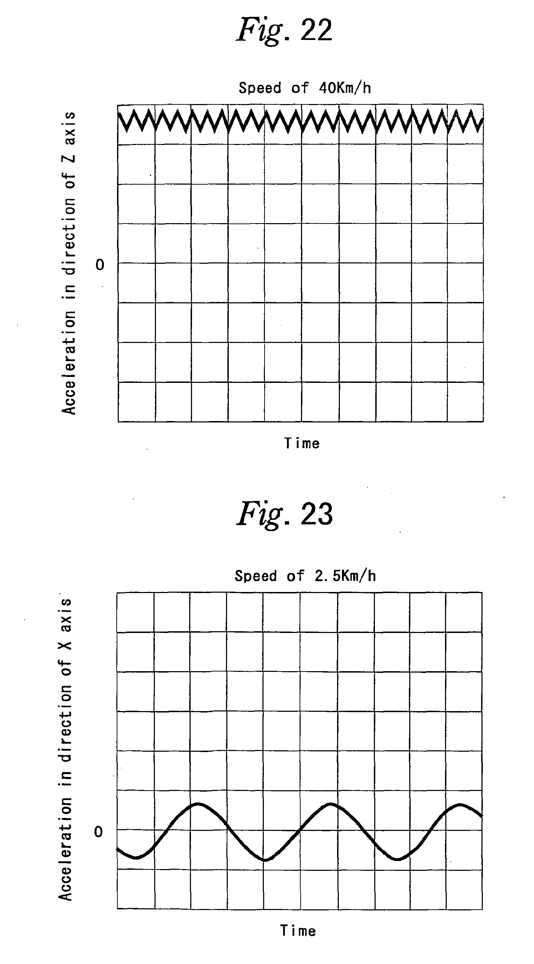

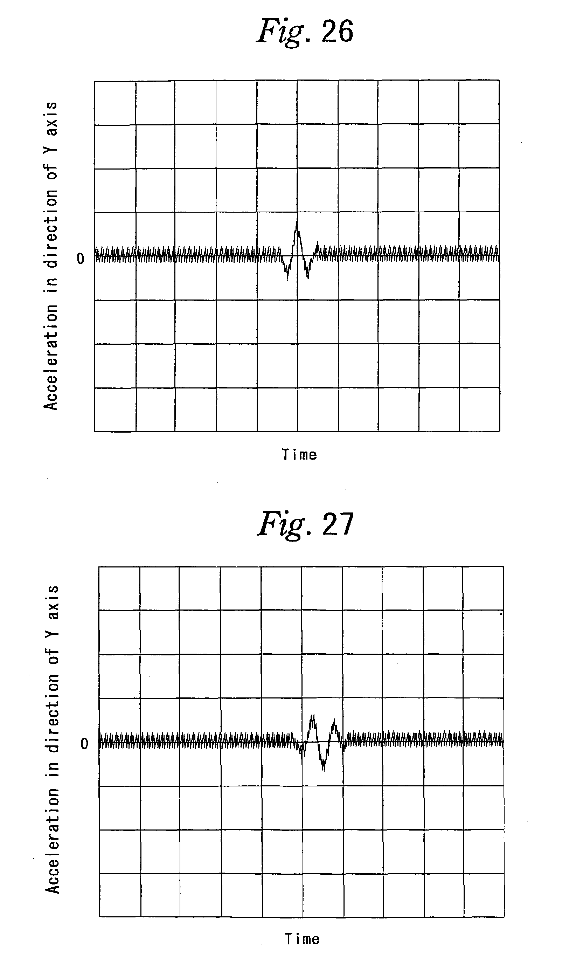

The measurement results of each acceleration sensed by the system having the above described configuration will now be described with reference to Figures 20 to 27. Figures 20 to 22 show the measurement results of acceleration in a direction of the Z axis, respectively. Figures 23 to 25 show the measurement results of acceleration in a direction of the X axis, respectively. Figures 26 and 27 show the measurement results of acceleration in a direction of the Y axis, respectively.

Referring to Figures 20 to 22, Figure 20 shows the measurement value of acceleration in a direction of the Z axis when the vehicle is running at a speed of 2.5 km per hour; Figure 21 shows the measurement value of acceleration in a direction of the Z axis when the vehicle is running at a speed of 20 km per hour; Figure 22 shows the measurement value of acceleration in a direction of the Z axis when the vehicle is running at a speed of 40 km per hour. In this way, as the running speed increases, centrifugal force becomes larger, so the acceleration in a direction of the Z axis also becomes larger. Accordingly, the running speed can be determined from the acceleration in a direction of the Z axis. In the drawings, the measurement value has a sinusoidal wave form because of being affected by gravity acceleration.

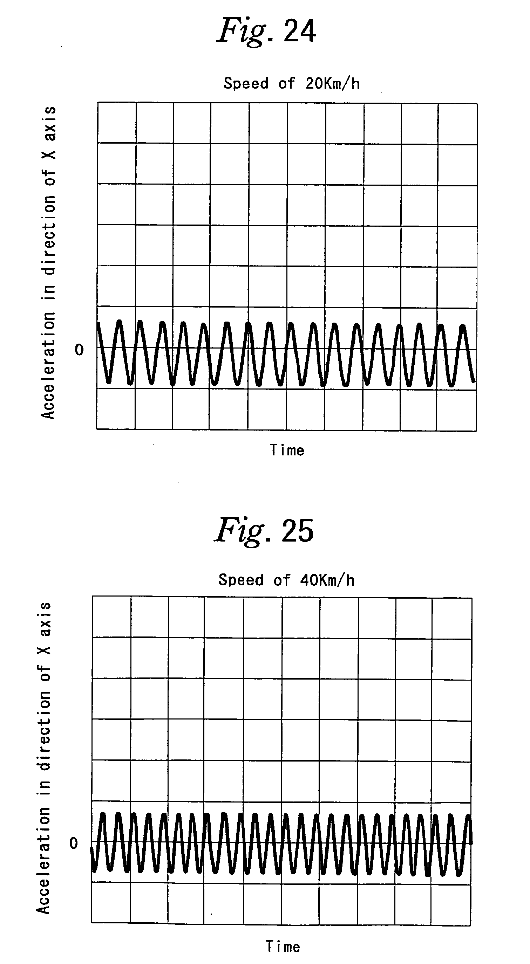

Referring to Figures 23 to 25, Figure 23 shows the measurement value of acceleration in a direction of the X axis when the vehicle is running at a speed of 2.5 km per hour; Figure 24 shows the measurement value of acceleration in a direction of the X axis when the vehicle is running at a speed of 20 km per hour; Figure 25 shows the measurement value of acceleration in a direction of the X axis when the vehicle is running at a speed of 40 km per hour. In this way, as the running speed increases, the number of rotations of the wheel becomes larger, so the period of variation of the acceleration in a direction of the X axis becomes shorter. Accordingly, the number of rotations of the wheel can be determined from the acceleration in a direction of the X axis. In the drawings, the measurement value has a sinusoidal wave form because of being affected by gravity acceleration similarly to the above description.

Figure 2 6 shows the measurement value of acceleration in a direction of the Y axis when the steering wheel is turned to the right during running of the vehicle. Figure 27 shows the measurement value of acceleration in a direction of the Y axis when the steering wheel is turned to the left during running of the vehicle. In this way, when the steering wheel is turned to swing the wheel to the right or left, the acceleration in a direction of the Y axis emerges noticeably. Also, it will easily be appreciated that, also when the vehicle body skids, the acceleration in a direction of the Y axis emerges similarly. In each of the above measurement values in a direction of the Y axis, acceleration in a reverse direction is observed because the driver slightly turns the steering wheel in a reverse direction unconsciously.

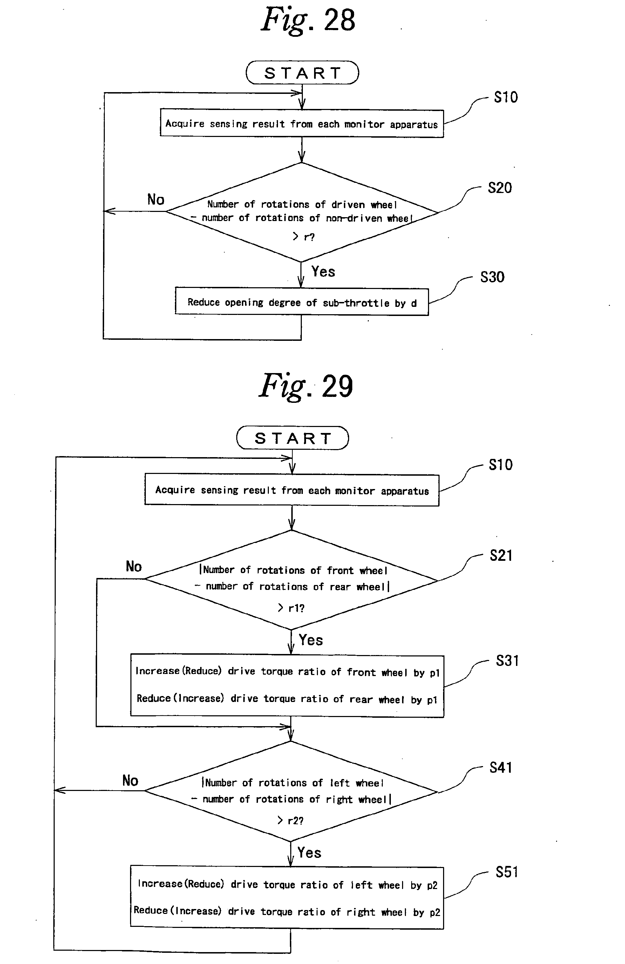

The operation of the drive control unit 700 eliminating a slip based on the sensing results of each acceleration in the directions of the X axis, and Y axis and Z axis, and of the number of rotations per unit time for each rotation mechanism section 500 outputted from the monitor apparatus 200 will now be described with reference to Figures 28 to 30.

In the description of a rear-wheel-drive vehicle of Figure 28, the average of the sensing results between the rotationmechanism section 500 in the front right side of the vehicle and the rotation mechanism section 500 in the front left side of the vehicle is represented as the non-driven wheel; the average of the sensing results between the rotation mechanism section 500 in the rear right side of the vehicle and the rotation mechanism section 500 in the rear left side of the vehicle is represented as the driven wheel. In the description of a four-wheel-drive vehicle of Figure 29, the average of the sensing results between the rotation mechanism section 500 in the front right side of the vehicle and the rotation mechanism section 500 in the front left side of the vehicle is represented as the front wheel; the average of the sensing results between the rotation mechanism section 500 in the rear right side of the vehicle and the rotation mechanism section 500 in the rear left side of the vehicle is represented as the rear wheel.

As shown in Figure 28, after acquiring the sensing results from each monitor apparatus 200 (S10), the drive control unit 700 of the two-wheel-drive vehicle senses the slip of the driven wheel from the difference of the number of rotations between the driven wheel and non-driven wheel (S20). When the difference of the number of rotations is larger than a threshold value (r), the opening degree of the sub-throttle 416 is reduced by a predetermined angle (d) to lessen the output of the engine 410 (S30), and S10 to S30 are repeated until the difference of the number of rotations becomes the threshold value (r) or less.

Accordingly, the drive torque can be generated according to the friction force produced between the tire and road surface, thus eliminating the slip. Also, by performing a control in consideration of the sensing result of the main throttle position sensor 413, the drive control unit 7 00 can perform a highly accurate control. For example, the amount of pushing down the accelerator pedal 411 is taken into consideration; when the amount of pushing down the accelerator pedal 411 is large, the predetermined angle in S30 is made smaller than usual to close slowly the sub-throttle 416, thus preventing sudden acceleration.

In S30, the sub-throttle 416 is closed to reduce the drive torque. However, alternatively, fuel maybe cut down, the brake maybe controlled, or a combination thereof may be performed. Also, when the running speed based on the acceleration in a direction of the Z axis is used instead of the number of rotations and a slip is sensed from the difference of running speed between the driven wheel and non-driven wheel, a similar drive control can be performed.

As shown in Figure 29, after acquiring the sensing results from each monitor apparatus 200 (S10), the drive control unit 700 of the four-wheel-drive vehicle senses a slip of the front wheel or rear wheel from the difference of the absolute value of the number of rotations between the front wheel and rear wheel (S21).

However, since a four-wheel-drive vehicle is driven by four wheels in the front and rear, and left and right sides, when the drive torque alone is reduced, the slip may not be eliminated. Thus the drive torque of the wheel which is slipping is distributed to the other wheels, thereby eliminating the slip to supply a proper drive force.

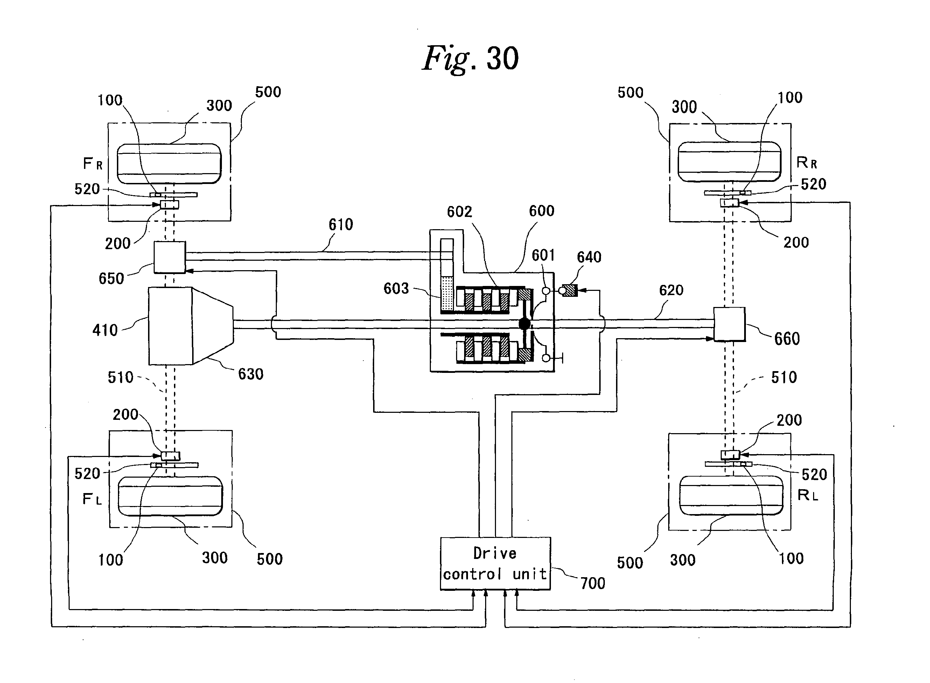

Examples of the technique of distributing the drive torque to the front and rear, and left and right wheels include a drive torque distribution mechanism shown in Figure 30. In the drawing, a transfer 600 is constituted of a piston 601, multi-plate clutch 602 and chain 603. The outer side of the multi-plate clutch 602 is coupled to a rear propeller shaft 620, and its inner side is coupled to the chain 603. A front propeller shaft 610 transfers the drive torque to the front wheels via the chain 603, and the rear propeller shaft 620, coupled directly to a transmission 630, transfers the drive torque to the rear wheels.

When hydraulic pressure is applied to a transfer actuator 640, the pressure bonding force of the multi-plate clutch 602 is varied via the piston 601; as the pressure bonding force is increased, the drive torque for the rear wheels is distributed to the front wheels. Accordingly, the pressure bonding force of the multi-plate clutch 602 is controlled by the control unit 700 driving the transfer actuator 640 to distribute the drive torque to the front wheels and rear wheels. Further the drive torque for the front wheels and rear wheels is distributed to the left and right wheels by controlling a front differential 650 and rear differential 660. With this mechanism, the ratio of drive torque between the front and rear, and left and right wheels can be varied to successive values from 0 to 100.

When the difference of the number of rotations between the front wheel and rear wheel is larger than a threshold value (r1), the drive torque ratio is distributed by a predetermined ratio (p1) from a wheel having a large value of the number of rotations to a wheel having a small value thereof (S31).

With respect to a wheel having a large value of the drive torque among the front wheels and rear wheels, a slip of the left wheel or right wheel is sensed from the difference of the absolute value of the number of rotations between the left wheel and right wheel (S41). When the difference of the number of rotations is larger than a predetermined value (r2), the drive torque ratio is distributed by a predetermined ratio (p2) from a wheel having a large value of the number of rotations to a wheel having a small value thereof (S51). S10 to S51 are repeated until the difference of the number of rotations between the front and rear wheels, and the difference of the number of rotations between the left and right wheels become the threshold values (r1, r2) or less, respectively. Accordingly, the drive torque can be distributed according to the respective friction forces produced between the four wheels and road surface, whereby the slip can be eliminated. Also, a more advanced drive control can be performed which prevents a slip from occurring. For example, with the sensing result of acceleration in a direction of the Y axis taken into consideration, when the acceleration in a lateral direction is large during cornering etc., the drive torque for the inner wheel which readily slips is distributed to the outer wheel to enlarge the turn (rotation).

When the drive torque is distributed to the front or rear wheel in S31, or distributed to the left or right wheel in S51, the sub-throttle 416 maybe controlled simultaneously. Also, the CPU of the drive control unit 700 may be programmed so that the distribution ratio is varied to a preliminarily stored value; for example, the ratio between the front and rear wheel is varied from 30:70 to 60:40. Also, in a two-wheel-drive vehicle provided with a drive torque distribution mechanism, the drive torque may be distributed between the left and right wheel.

In a typical drive control apparatus of conventional art, a sensing result outputted from the sensor which senses the number of rotations of the tire 300 installed in the vehicle is retrieved to control the sub-throttle actuator 412. However, with the drive control apparatus provided with the above described tire state sensing apparatus, the above described sensor unit 100 is provided, and the sensing results, outputted from the monitor apparatus 200, of each acceleration in the X axis, Y axis and Z axis, and of the number of rotations per unit time and running speed of a wheel for each rotation mechanism section 500 are retrieved to the drive control unit 700 as a digital value, whereby the drive control can be performed based on a larger amount of highly accurate data than conventional art.

Even when the kind and state of tire installed in the vehicle is different, or even when each tire is separately driven and controlled as with a four-wheel-drive vehicle, the drive torque is generated and distributed according to the friction force produced between the tire and road surface, whereby a more advanced control can be performed.

As described above, in the present embodiment, when receiving a radio wave radiated from the monitor apparatus 200 to acquire electric energy, the sensor unit 100 transmits the sensing result, so the above described effect can be achieved even when the detecting section 150 is not provided. Also, with the sensor unit 100 provided with the detecting section 150, the program etc. are set such that, upon receipt of the self identification data from the monitor apparatus 200, the sensing result is transmitted from the sensor unit 100, whereby the sensing result is prevented from being transmitted in response to unwanted noises from the outside.

In the present embodiment, the distortion characteristic data representing the relationship between the acceleration obtained from the monitor apparatus 200 and the amount of distortion of the tire 300 is stored in the drive control unit 700, and the drive control unit 700 estimates the amount of distortion of the tire 300 based on the sensing result of acceleration and the distortion characteristic data. However, the distortion characteristic data may be stored in the monitor apparatus 200. In this case, the amount of distortion of the tire 300 is estimated in the monitor apparatus 200, the estimation result is outputted to the drive control unit 700, and the drive control unit 700 controls the sub-throttle actuator 412 based on the estimation result to drive the sub-throttle 416.

The transfer of digital data between the sensor unit 100 and monitor apparatus 200 may be performed by use of electromagnetic inductive coupling which uses coils, or by use of a brush as used in a motor or the like.

A second embodiment of the present invention will now be described.

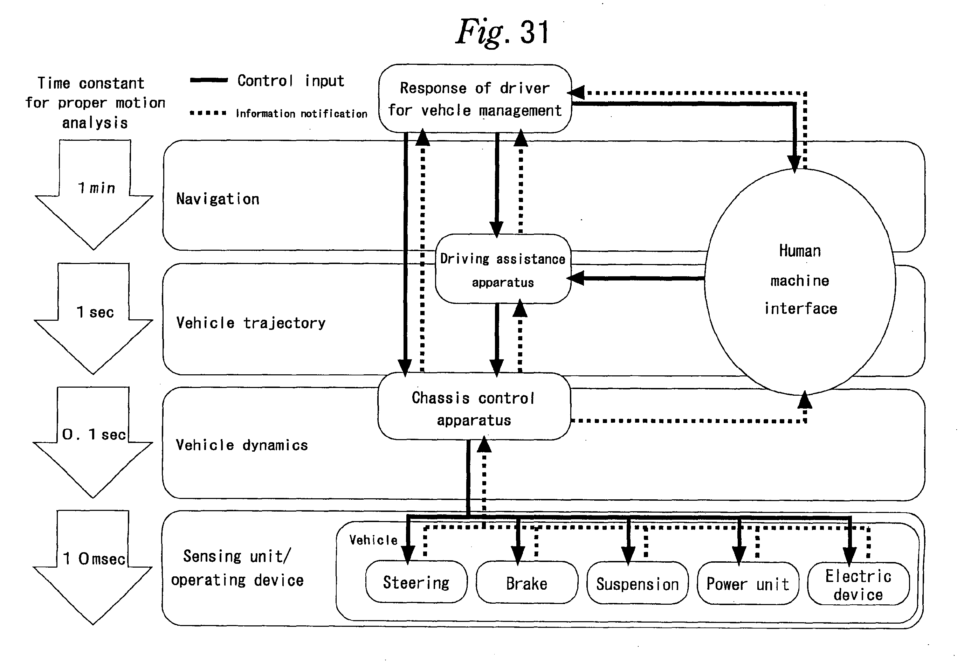

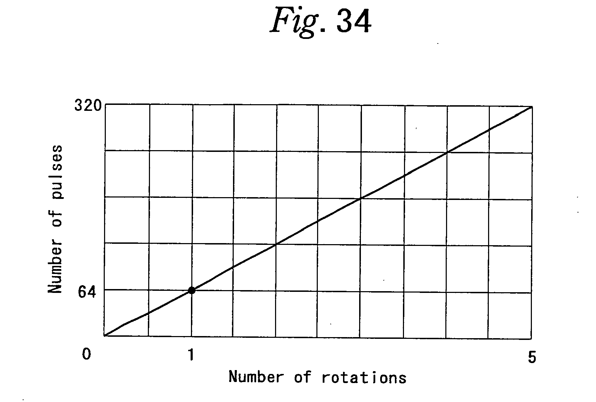

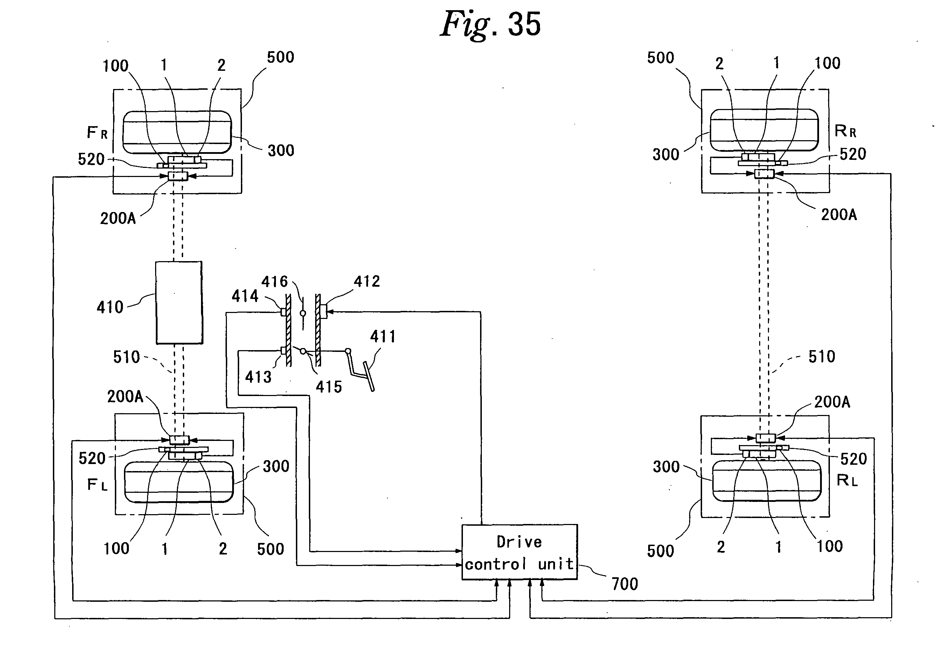

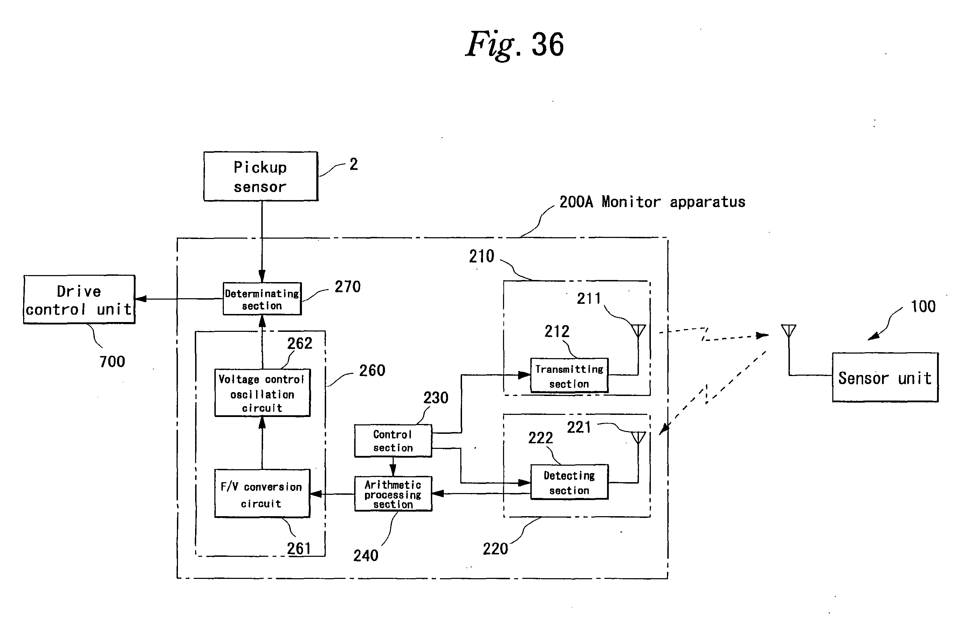

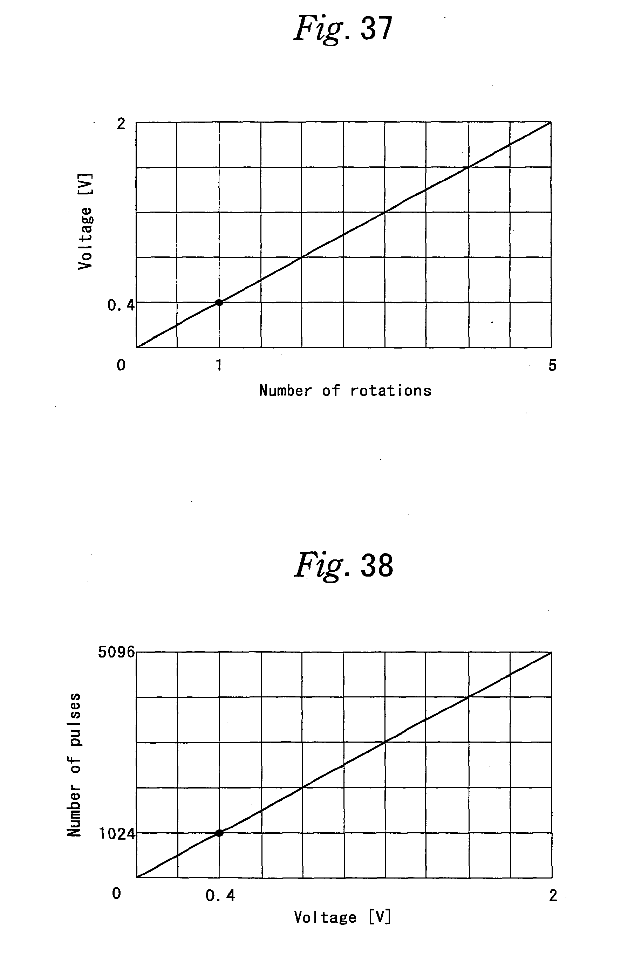

Figure 31 is a conceptual view for explaining time constants in vehicle management. Figure 32 is a view for explaining a conventional number-of-rotations sensing mechanism for a wheel. Figure 33 is a view for explaining the conventional number-of-rotations sensing mechanism for a wheel. Figure 34 is a view showing the relationship between a first number of rotations and the number of pulses according to a second embodiment of the present invention. Figure 35 is a schematic configuration diagram showing a drive control apparatus for a vehicle according to the second embodiment of the present invention. Figure 36 is a configuration diagram showing an electrical circuit of a monitor apparatus according to the second embodiment of the present invention. Figure 37 is a view showing the relationship between a second number of rotations and the output voltage according to the second embodiment of the present invention. Figure 38 is a view showing the relationship between the output voltage and the number of pulses according to the second embodiment of the present invention. In the above drawings, the same reference numerals are applied to constituent components corresponding to the above described first embodiment, and an explanation thereof is omitted.

Generally, the time constant required in vehicle management varies according to the motion analysis objects, and as shown in Figure 31, becomes shorter in order of navigation, vehicle trajectory, vehicle dynamics and sensing unit/operating device. In order for the vehicle control apparatus to drive each sensing unit/operating device (sensor/actuator) and perform a proper vehicle control, information notification at an time interval of 10 msec from the steering, brake, suspension, power unit, electric device, and so on, is required.

In the first and second embodiments, there is no limit of time accuracy due to the number of concaves and convexes as with a conventional number-of-rotations sensing mechanism for a vehicle; thus the digital data is transmitted and received at a time interval of 10 msec or less by the above described configuration.

However, due to thermal noise, failure of the sensor unit 100 and other reasons, the digital data inconsistent with the previous or next data can be transmitted and received. Therefore, any means for confirming the reliability of the digital data is needed.

The difference between the first and second embodiments is that, in the second embodiment, a first number of rotations is sensed by use of a pickup sensor 2 disposed in each rotation mechanism section 500, and it is confirmed that the sensed first number of rotations is identical to a second number of rotations calculated from the acceleration in a direction of the X axis.

A pickup sensor 2 disposed in the vicinity of a rotor 1 is a conventional number-of-rotations sensing mechanism for a wheel as shown in Figures 32 and 33; multiple concaves and convexes spaced equally around the circumferential surface of the rotor 1 traverse the magnetic field generated by the pickup sensor 2, whereby the magnetic flux density is varied, generating a pulsed voltage in a coil of the pickup sensor 2. The pickup sensor 2 converts the voltage to a pulse signal, and transmits it to a monitor apparatus 200A connected thereto via a cable. In the present embodiment, the number of concaves and convexes of the rotor 1 is set to 64, so 64 pulses per rotation is outputted as shown in Figure 34. Accordingly, by counting the number of pulses per unit time, the first number of rotations per unit time can be calculated.

In the present embodiment, the pulse signal is transmitted via a cable. However, radio communication may be performed by use of radio wave, or alternatively the pulsed voltage may be sent directly to the monitor apparatus 200A, where it is converted to a pulse signal.

In the present embodiment, the pickup sensor 2 disposed in the vicinity of the rotor 1 is illustrated. The present invention, however, is not limited to this, and the first number of rotations for a wheel may be sensed in each rotation mechanism section 500.

The monitor apparatus 200A has a configuration similar to the monitor apparatus 200 of the first embodiment. The difference from the monitor apparatus 200 of the first embodiment is that the monitor apparatus 200A is provided with: a converting section 260 for converting the second number of rotations per unit time outputted from the arithmetic processing section 240 to a pulse signal; and a determining section 270 for comparing the pulse signal of the first number of rotations transmitted from the pickup sensor 2 with the pulse signal of the second number of rotations.

As shown in Figure 36, the converting section 260 is constituted of a frequency/voltage (hereinafter referred to as F/V) conversion circuit 261 and a voltage control oscillation circuit 262. The F/V conversion circuit 261 converts the second number of rotations per unit time calculated from the acceleration in a direction of the X axis and outputted from the control section 240 to a voltage corresponding to the number of rotations (= frequency) per unit time. In the present embodiment, as shown in Figure 37, a voltage of 0.4 [V] per rotation is outputted. In the voltage control oscillation circuit 262 constituted of a known VCO (voltage-controlled oscillator) etc., there is performed a conversion to the pulse signal having the number of pulses corresponding to the voltage outputted from the F/V conversion circuit 261. In the present embodiment, as shown in Figure38, a pulse signal having 1024 pulses per 0.4 [V] (= one rotation) is outputted.

Accordingly, the second number of rotations is converted to a pulse signal having a vibration (= 1024 x the number of rotations = 1/period) corresponding to the number of rotations and representing the vibration by use of pulse, and can be easily compared with the pulse signal of the first number of rotations transmitted from the above described pickup sensor 2.

The above described configuration may be disposed in the central processing section 140 of the sensor unit 100 to perform the conversion to the pulse signal of the second number of rotations and transmit the resultant data included in the above described digital data.

The determining section 270 is constituted of a known CPU and a memory circuit composed of an ROM having stored therein a program for operating the CPU and an RAM etc. required for performing arithmetic processing. The determining section 270 receives the pulse signal of the first number of rotations transmitted from the pickup sensor 2 and the pulse signal of the second number of rotations outputted from the F/V conversion circuit 261, and at the same time determines, based on this pulse signal, whether or not the first number of rotations is identical to the second number of rotations, and outputs the determination result together with the sensing results of each acceleration to the drive control unit 700.

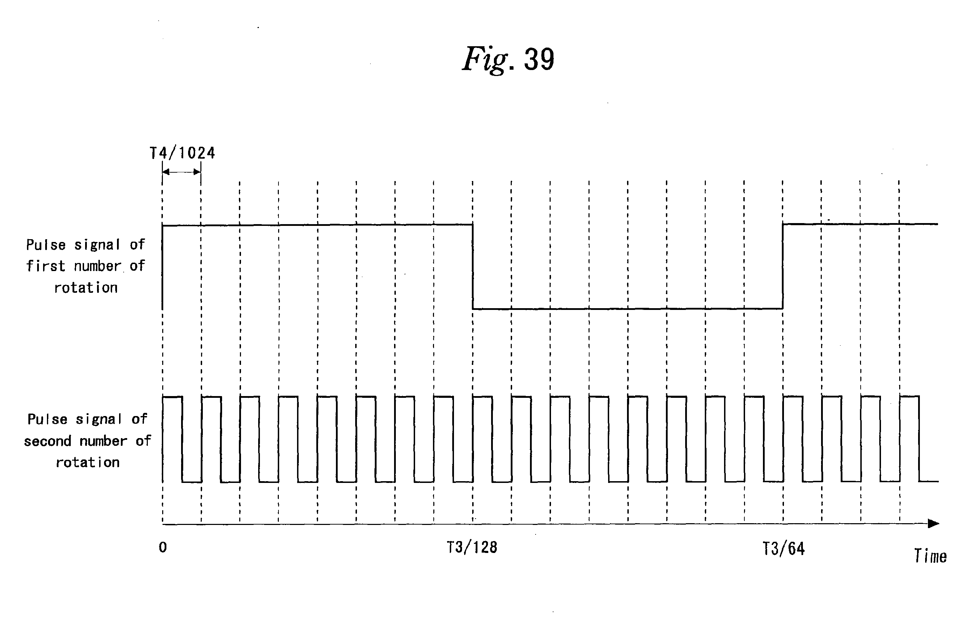

The operation of the system having the above described configuration will now be described with reference to Figures 39 to 41. In this description, the rotation period based on the first number of rotations is referred to as T3, the pulse signal period based on the first number of rotations is referred to as t3, the rotation period based on the second number of rotations is referred to as T4, and the pulse signal period based on the second number of rotations is referred to as t4.

For the pulse signal of the first number of rotations, 64 pulses are generated per time T3 taken for a wheel to make one turn; thus, one pulse is generated per time T3/64 (t3 = T3/64). For the pulse signal of the second number of rotations, 1024 pulses are generated per time T4 taken for a wheel to make one turn; thus, one pulse is generated per time T4/1024 (t4 = T4/1024). Accordingly, for the pulse signal of the first number of rotations and the pulse signal of the second number of rotations, a predetermined pulse is generated independently of the number of rotations; the period of the pulse signal increases and decreases according to the change of the number of rotations.

When the first number of rotations is identical to the second number of rotations (T3 = T4), 16 pulses of the pulse signal of the second number of rotations are generated per one period of the pulse signal of the first number of rotations (t3 = 16 x t4), as shown in Figure 39. Thus, by adjusting the phase of the first pulse, the N-th (N being an integral number of 1 or more) pulse of the pulse signal of the first number of rotations and the 16 (N - 1) + 1 -th pulse of the pulse signal of the second number of rotations are generated simultaneously.

The determining section 270 measures that the period of the pulse signal of the first number of rotations is t3 per unit time and the period of the pulse signal of the second number of rotations is t3/16, and thereby determines that the first number of rotations is identical to the second number of rotations.

In the present embodiment, the period of the pulse signal generated per unit time is measured to perform the determination. Alternatively, it may be measured that a predetermined number of pulses is generated per unit time, to thereby determine that the first number of rotations is identical to the second number of rotations.

Accordingly,with the above described configuration and operation, the first number of rotations is sensed by use of the pickup sensor 2 disposed in each rotation mechanism section 500, and the monitor apparatus 200A confirms that the first number of rotations thus sensed is identical to the second number of rotations calculated from the acceleration in a direction of the X axis, whereby the reliability of the digital data including the acceleration in a direction of the X axis received from the sensor unit 100 can be secured, and based on the sensing result whose reliability has been secured, the effect similar to the first embodiment can be achieved.

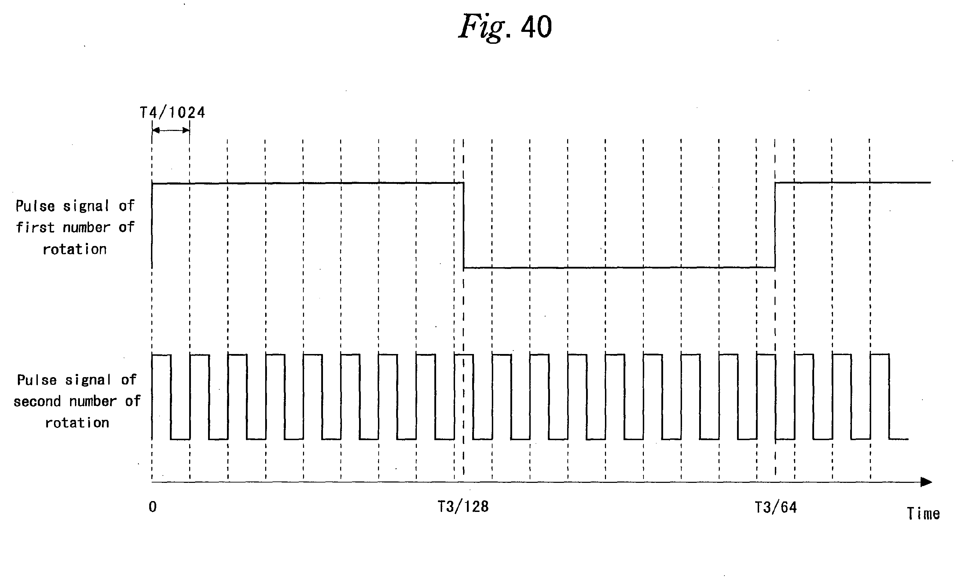

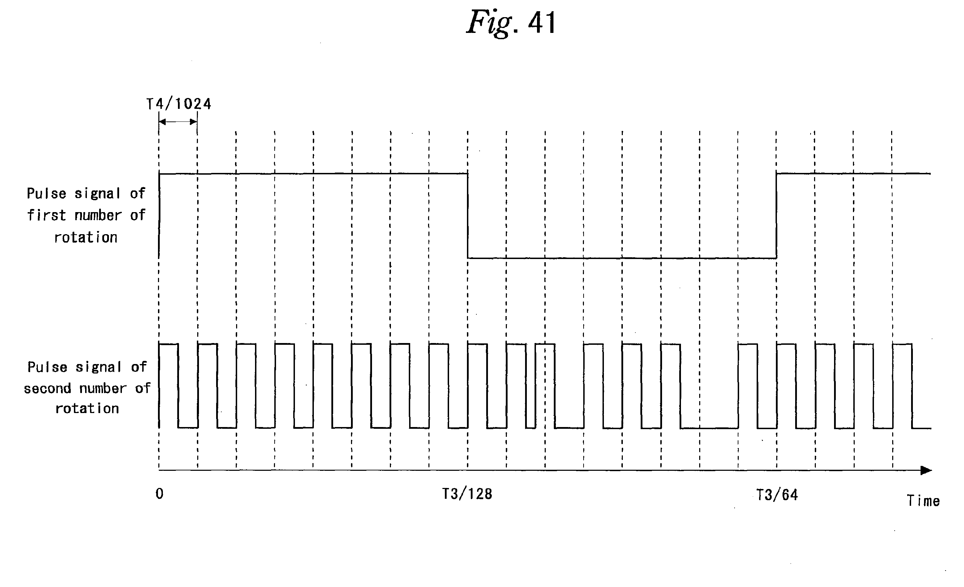

As shown in Figure 40, when the period of the pulse signal of the second number of rotations is not a predetermined multiple relative to the pulse signal of the first number of rotations (t4 ≠ t3/16), it is highly likely that the first number of rotations is not identical to the second number of rotations (T3 ≠ T4), and it is expected that there is an error in the digital data on which the second number of rotations is based. Meanwhile, as shown in Figure 41, when while the period of a particular pulse is shifted or dropped, the period of the other part is a predetermined multiple of the period of the pulse signal of the first number of rotations (t4 = t3/16), it is highly likely that the first number of rotations is identical to the second number of rotations (T3 = T4), and it is expected that there is an error in the pulse signal of the second number of rotations.

Preferably safety functions are added to the drive control unit 700. For example, when it is expected that there is an error in the pulse signal of the second number of rotations, while the brake control is performed based on the sensing result of each acceleration outputted from each monitor apparatus 200A, if the state of there being an error in the digital data continues for a given time period, then preferably the malfunction due to the sensing result of each acceleration is prevented from occurring, or the failure of each sensor unit 100 is notified.

A third embodiment of the present invention will now be described.

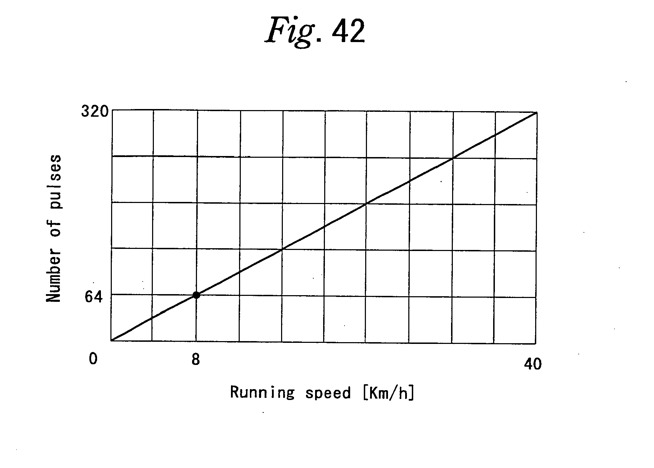

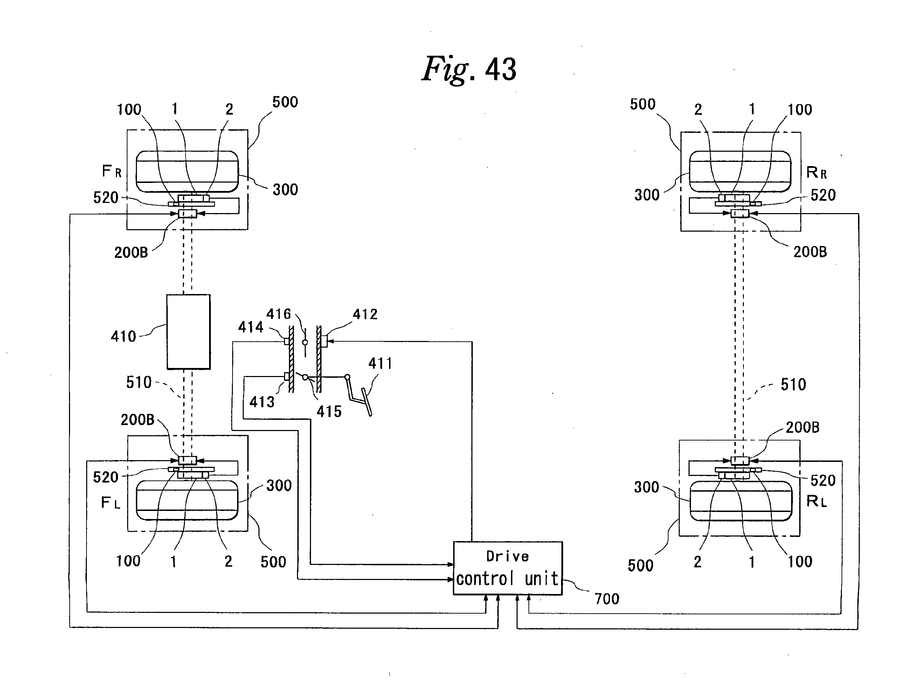

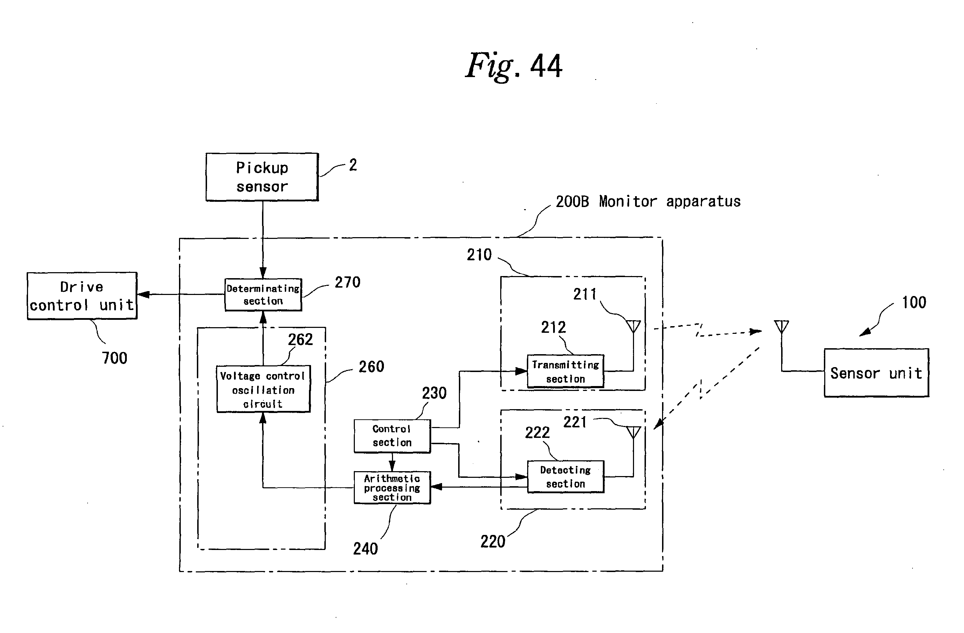

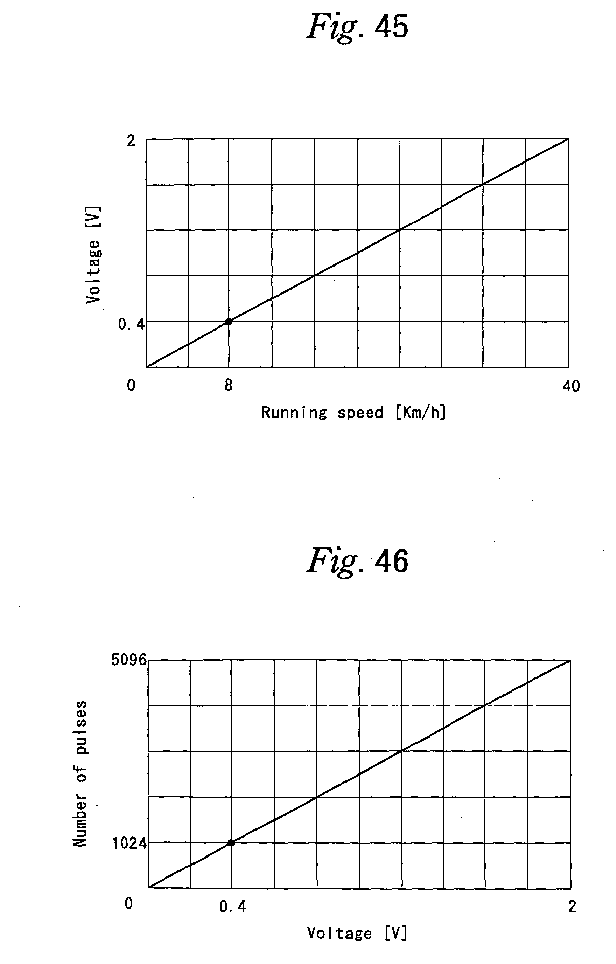

Figure 42 is a view showing the relationship between a first running speed and the number of pulses according to a third embodiment of the present invention. Figure 43 is a schematic configuration diagram showing a drive control apparatus for a vehicle according to the third embodiment of the present invention. Figure 44 is a configuration diagram showing an electrical circuit of a monitor apparatus according to the third embodiment of the present invention. Figure 45 is a view showing the relationship between a second running speed and the output voltage according to the third embodiment of the present invention. Figure 46 is a view showing the relationship between the output voltage and the number of pulses according to the third embodiment of the present invention. In the above drawings, the same reference numerals are applied to constituent components corresponding to the above described second embodiment, and an explanation thereof is omitted.

The difference between the second and third embodiments is that, in the third embodiment, a first running speed is sensed by use of the pickup sensor 2, and it is confirmed that the sensed running speed is identical to the second running speed calculated from the acceleration in a direction of the Z axis.

In the present embodiment, the length per one rotation of tire is set to 2.2 [m]; one turn per second makes a running speed of about 8 [Km/h]. In this case, as shown in Figure 42, the rotor 2 outputs the pulse signal of 64 pulses. Accordingly, by counting the number of pulses per second, the first running speed can be calculated.

The monitor apparatus 200B has a configuration similar to the monitor apparatus 200A of the second embodiment. The difference from the monitor apparatus 200A of the second embodiment is that the F/V conversion circuit 261 is not needed in the converting section 260 for converting the second running speed outputted from the arithmetic processing section 240 to a pulse signal.

A voltage corresponding to the acceleration in a direction of the Z axis sensed by the semiconductor acceleration sensor 10, included in the digital data, is transmitted, and the second running speed is calculated from the acceleration in a direction of the Z axis in the control section 240, and at the same time, the voltage of the acceleration in a direction of the Z axis is outputted to the voltage control oscillation circuit 262. In the present embodiment, as shown in Figures 45 and 46, a voltage of 0.4 [V] corresponds to the running speed 8 [Km/h], and the pulse signal of 1024 pulses is outputted per 0.4 [V] (= 8 [Km/h]).

Accordingly, the second running speed is converted to a pulse signal having a vibration (= 1024 x the number of rotations = 1/period) corresponding to the running speed and representing the vibration by use of pulse, and can be easily compared with the pulse signal of the first running speed transmitted from the pickup sensor 2.

By calculating the second running speed from the acceleration in a direction of the Z axis and calculating the second number of rotations per unit time from the second running speed, the present embodiment may have a configuration similar to the second embodiment.

Accordingly, with the above described configuration, the first running speed is sensed by use of the pickup sensor 2 disposed in each rotation mechanism section 500, and the monitor apparatus 200B confirms that the first running speed thus sensed is identical to the second running speed calculated from the acceleration in a direction of the Z axis, whereby the reliability of the digital data including the acceleration in a direction of the Z axis received from the sensor unit 100 can be secured, and based on the sensing result whose reliability has been secured, the effect similar to the first embodiment can be achieved.

A system constituted by combining the configurations of each the above described embodiments, or by replacing part of the constituent components is also possible.

In each the above described embodiments, both the first and second frequencies are set to 2.45 GHz. The present invention is not limited to this; as described above, in the case of a frequency of 1 GHz or more is employed, the effects of reflection, blocking, etc. of a radio wave by a metal within the tire can be significantly reduced, so that the sensing data by the sensor unit 100 can be obtained with high accuracy, and the first and second frequencies may be different. Preferably the first and second frequencies are set properly during design.

In each the above described embodiments, the traction control system for a four-wheel vehicle was taken as an example to describe the present invention. However, it will easily be appreciated that, with any vehicle other than a four-wheel vehicle, such as a two-wheel vehicle or a vehicle having 6 or more wheels, a similar effect can be achieved.

The configuration of the present invention is not limited to the above described embodiments, and many modifications to the embodiments are possible without departing from the gist of the invention.

### INDUSTRIAL APPLICABILITY OF THE INVENTION

Accelerations in three directions orthogonal to each other can be sensed with high accuracy by use of a sensor unit disposed in a predetermined position of each rotationmechanism section of the vehicle, and a drive actuator is controlled based on the sensed accelerations. Accordingly, a proper control is possible during running of the vehicle, and the system according to the present invention can be used to control the drive of the vehicle.

The sensor unit is disposed in a predetermined position of each rotation mechanism section of the vehicle body, whereby accelerations in the vertical, longitudinal and lateral directions generated in each wheel can be sensed. Accordingly, the sensor unit according to the present invention can be applied to a vehicle, such as a four-wheel-drive vehicle, in which a separate drive control is performed for each tire, or to a case in which the drive torque is generated and distributed according to the friction force produced between the tire and road surface.

## Claims

1. A traction control system for a vehicle which is constituted so as to drive an engine throttle drive actuator according to a result of sensing an accelerator operation state of the vehicle and thereby cause a target drive force to be generated, the traction control system comprising:
a sensor unit disposed in a rotation mechanism section including a body of rotation positioned in the vehicle body side, for securing a wheel and allowing the wheel to rotate, and the wheel, the sensor unit sensing a first acceleration generated in association with rotation in a direction orthogonal to the rotation axis, and a second acceleration generated in a direction of rotation, and converting a sensing results of the first and second accelerations to a digital value, and transmitting digital data including the digital value;
a monitor apparatus which receives the digital data transmitted from the sensor unit to acquire the sensing results of the first and second accelerations; and
drive means which drives the engine throttle drive actuator based on the sensing results of the first and second accelerations acquired by the monitor apparatus.

2. The traction control system according to claim 1, wherein:
the sensor unit includes means which senses a third acceleration generated in a direction of the rotation axis, converts the sensing result to a digital value, and transmits the digital value, included in the digital data, to the monitor apparatus;
the monitor apparatus includes means which acquires the sensing result of the third acceleration; and
the drive means has means which drives the engine throttle drive actuator based on the sensing results of the first, second and third accelerations.

3. The traction control system according to claim 2, wherein:
the sensor unit includes means which senses a change of the second acceleration, means which senses the number of rotations per unit time based on the change of the second acceleration, and means which converts the sensed number of rotations to a digital value and transmits the digital value, included in the digital data, to the monitor apparatus;
the monitor apparatus includes means which receives the digital value of the number of rotations from the sensor unit; and
the drive means includes means which drives the engine throttle drive actuator based on the sensing results of the first, second and third accelerations and the sensing result of the number of rotations.

4. The traction control system according to claim 2, wherein:
the sensor unit includes means which senses a change of the first acceleration, means which senses the running speed based on the change of the first acceleration, and means which converts the sensed running speed to a digital value and transmits the digital value, included in the digital data, to the monitor apparatus;
the monitor apparatus includes means which receives the digital value of the running speed from the sensor unit; and
the drive means includes means which drives the engine throttle drive actuator based on the sensing results of the first, second and third accelerations and the sensing result of the running speed.

5. A traction control system for a vehicle which is constituted so as to drive each drive actuator of an engine throttle and a drive torque distribution mechanism according to a result of sensing an accelerator operation state of the vehicle and thereby cause a target drive force to be generated, the traction control system comprising:
a plurality of sensor units disposed in each of a plurality of rotation mechanism sections including a body of rotation positioned in the vehicle body side, for securing a wheel and allowing the wheel to rotate, and the wheel, respectively, the plurality of sensor units sensing a first acceleration generated in association with rotation in a direction orthogonal to the rotation axis, and a second acceleration generated in a direction of rotation, and converting a sensing results of the first and second accelerations to a digital value, and transmitting digital data including the digital value;
a monitor apparatus which receives the digital data transmitted from the plurality of sensor units to acquire the sensing results of the first and second accelerations; and
control means which controls the drive of a predetermined one from among each said drive actuator based on the sensing results of the first and second accelerations acquired by the monitor apparatus.

6. The traction control system according to claim 5, wherein the drive torque distribution mechanism includes means which distributes to at least one from among the plurality of wheels, the drive torque generated in association with the drive of the engine throttle.

7. The traction control system according to claim 6, wherein the drive torque distribution mechanism includes means which varies the ratio of the drive torque to successive values from 0 to 100.

8. The traction control system according to claim 5, wherein:
the sensor unit includes means which senses a third acceleration generated in a direction of the rotation axis, converts the sensing result to a digital value, and transmits the digital value, included in the digital data, to the monitor apparatus;
the monitor apparatus includes means which acquires the sensing result of the third acceleration; and
the control means has means which controls the drive of a predetermined one from among each said drive actuator based on the sensing results of the first, second and third accelerations.

9. The traction control system according to claim 8, wherein:
the sensor unit includes means which senses a change of the second acceleration, means which senses the number of rotations per unit time based on the change of the second acceleration, and means which converts the sensed number of rotations to a digital value and transmits the digital value, included in the digital data, to the monitor apparatus;
the monitor apparatus includes means which receives the digital value of the number of rotations from the sensor unit; and
the control means has means which controls the drive of a predetermined one from among each said drive actuator based on the sensing results of the first, second and third accelerations and the sensing result of the number of rotations.

10. The traction control system according to claim 8, wherein:
the sensor unit includes means which senses a change of the first acceleration, means which senses the running speed based on the change of the first acceleration, and means which converts the sensed running speed to a digital value and transmits the digital value, included in the digital data, to the monitor apparatus;
the monitor apparatus includes means which receives the digital value of the running speed from the sensor unit; and
the control means has means which controls the drive of a predetermined one from among each said drive actuator based on the sensing results of the first, second and third accelerations and the sensing result of the running speed.

11. The traction control system according to claim 9, wherein the control means has means which controls the drive of a predetermined actuator from among each said drive actuator so that the difference of the number of rotations becomes equal to or smaller than the predetermined value, when the difference between the numbers of rotat ions sensed by two or more predetermined sensor units from among the plurality of sensor units is larger than a predetermined value.

12. The traction control system according to claim 10, wherein the control means has means which controls the drive of a predetermined actuator from among each said drive actuator so that the difference of the running speed becomes equal to or smaller than the predetermined value, when the difference between the running speeds sensed by two or more predetermined sensor units from among the plurality of sensor units is larger than a predetermined value.

13. The traction control system according to claim 1, wherein the sensor unit is disposed in the body of rotation.

14. The traction control system according to claim 1, wherein:
the sensor unit includes means which receives a radio wave of a first frequency, means which converts the energy of the received radio wave of the first frequency to electric drive energy, and means which is operated by the electric energy to transmit the digital data by use of a radio wave of a second frequency; and
the monitor apparatus includes means which radiates the radio wave of a first frequency, means which receives the radio wave of a second frequency, and means which extracts the digital data from the received radio wave of the second frequency.

15. The traction control system according to claim 14, wherein the first frequency is identical to the second frequency.

16. The traction control system according to claim 1, wherein:
the sensor unit includes storage means which includes stored therein identification data unique to the self, and means which transmits the identification data included in the digital data; and
the monitor apparatus includes means which identifies the rotation mechanism section based on the identification data.

17. The traction control system according to claim 1, wherein the sensor unit includes a semiconductor acceleration sensor, having a silicon piezo diaphragm, for sensing accelerations orthogonal to each other.

18. The traction control system according to claim 1, further comprising a number-of-rotations sensing mechanism, disposed in the rotation mechanism section, for sensing a first number of rotations per unit time associated with the rotation of the wheel and transmitting the sensing result to the monitor apparatus, wherein:
the sensor unit includes means which senses the change of the second acceleration, means which senses a second number of rotations per unit time based on the change of the second acceleration, and means which converts the sensed second number of rotations to a digital value and transmits the digital value, included in the digital data, to the monitor apparatus; and
the monitor apparatus includes means which receives the sensing result of the first number of rotations from the number-of- rotations sensing mechanism, means which receives the sensing result of the second number of rotations from the sensor unit, and determination means which determines whether or not the first number of rotations is identical to the second number of rotations.

19. The traction control system according to claim 18, wherein the number-of-rotations sensing mechanism includes a disk, disposed in the body of rotation, which includes a plurality of concaves and convexes spaced equally around the circumferential surface thereof, and means which generates magnetic field and senses a voltage associated with a change of the magnetic field.

20. The traction control system according to claim 18, wherein:
the number-of-rotations sensing mechanism includes means which converts the sensing result of the first number of rotations to a digital signal;
the monitor apparatus includes means which converts the sensing result of the second number of rotations to a digital signal; and
the determination means has means which determines based on the digital signals of the first number of rotations and the second number of rotations, whether or not the first number of rotations is identical to the second number of rotations.

21. The traction control system according to claim 20, wherein the conversion means has means which multiplies the digital value of the second number of rotations by a predetermined value and converts the digital value to a digital signal having a period being the reciprocal number of the multiplication value.

22. The traction control system according to claim 20, wherein the determination means has means which determines that the first number of rotations is identical to the second number of rotations, when a vibration of the digital signal of the second number of rotations is generated every predetermined multiple of the period of the digital signal of the first number of rotations.

23. The traction control system according to claim 1, further comprising a number-of-rotations sensing mechanism, disposed in the rotation mechanism section, for sensing a first running speed per unit time associated with the rotation of the wheel and transmitting the sensing result to the monitor apparatus, wherein:
the sensor unit includes means which senses a change of the first acceleration, means which senses a second running speed per unit time based on the change of the first acceleration, and means which converts the sensed second running speed to a digital value and transmits the digital value, included in the digital data, to the monitor apparatus; and
the monitor apparatus includes means which receives the sensing result of the first running speed from the number-of-rotations sensing mechanism, means which receives the sensing result of the second running speed from the sensor unit, and determination means which determines whether or not the first running speed is identical to the second running speed.

24. The traction control system according to claim 23, wherein the number-of-rotations sensing mechanism includes a disk, disposed in the body of rotation, having a plurality of concaves and convexes spaced equally around the circumferential surface thereof, and means which generates magnetic field and senses a voltage associated with a change of the magnetic field.

25. The traction control system according to claim 23, wherein:
the number-of-rotations sensing mechanism includes means which converts the sensing result of the first running speed to a digital signal;
the monitor apparatus includes means which converts the sensing result of the second running speed to a digital signal; and
the determination means has means which determines based on the digital signals of the first running speed and the second running speeds, whether or not the first running speed is identical to the second running speed.

26. The traction control system according to claim 25, wherein the conversion means has means which multiplies the digital value of the second running speed by a predetermined value and converts the digital value to a digital signal having a period being the reciprocal number of the multiplication value.

27. The traction control system according to claim 25, wherein the determination means has means which determines that the first number of rotations is identical to the second number of rotations, when a vibration of the digital signal of the second number of rotations is generated every predetermined multiple of the period of the digital signal of the first number of rotations.

28. A sensor unit which senses an acceleration generated in association with rotation, disposed in a rotation mechanism section including a body of rotation positioned in the vehicle body side, for securing a wheel and allowing the wheel to rotate, and the wheel, the sensor unit being included in a traction control system for a vehicle which is constituted so as to drive an engine throttle drive actuator according to a result of sensing an accelerator operation state of the vehicle and thereby cause a target drive force to be generated, the sensor unit comprising:
means which senses a first acceleration generated in association with rotation in a direction orthogonal to the rotation axis, and a second acceleration generated in a direction of rotation;
means which converts the sensing results of the first acceleration and the second acceleration to a digital value; and
means which transmits digital data including the digital value.
